# EUROPEAN PATENT APPLICATION

(11) **EP 4 668 438 A1**
(43) Date of publication of application: **24.12.2025**
(21) Application number: 24813923.0
(22) Date of filing: 12.04.2024
(51) Int. Cl.: H01M 50/242

(54) **BATTERY CASE, BATTERY, BATTERY MOUNTING FRAME, VEHICLE FRAME, AND ELECTRICAL DEVICE**

(30) Priority: 26.05.2023 CN 202310613023
(71) Applicant: Contemporary Amperex Technology Co., Limited, Ningde, Fujian 352100 (CN); Contemporary Amperex Energy Service Technology Limited, Xiamen, Fujian 361001 (CN)
(72) Inventor: ZENG, Zhimin, Ningde, Fujian 352100 (CN); BAO, Yichen, Ningde, Fujian 352100 (CN); SHUAI, Ling, Ningde, Fujian 352100 (CN); WANG, Kangyu, Ningde, Fujian 352100 (CN); WU, Yuanhe, Ningde, Fujian 352100 (CN)
(74) Representative: Gong, Jinping
(86) International application number: PCT/CN2024/087517
(87) International publication number: WO 2024/244717

(57) **Abstract**

A battery box (2), a battery (100), a battery mounting frame (10), a vehicle frame, and an electric apparatus, where the battery box (2) includes: a box body (20); and a first buffer member (21), arranged on an outer wall surface (201) of the box body (20), where the first buffer member (21) has a first buffer surface (211) facing away from the interior of the box body (20), and the first buffer surface (211) is configured as intersecting with both a horizontal plane and a vertical plane perpendicular to the horizontal plane.

## Description

### CROSS-REFERENCE TO RELATED APPLICATIONS

This application claims priority to Chinese Patent Application No. 202310613023.9, filed on May 26, 2023, which is incorporated herein by reference in its entirety.

### TECHNICAL FIELD

This application relates to the field of battery technologies, and specifically to a battery box, a battery, a battery mounting frame, a vehicle frame, and an electric apparatus.

### BACKGROUND

In related technologies, the battery box can be used for mounting battery cells, and the battery cells can provide electric energy to electric devices. For example, the battery box can be mounted in a new energy vehicle, and the battery cells inside the battery box can provide electric energy to the new energy vehicle. When the battery box is subjected to impacts, collisions, and other stresses, the battery cells are prone to damage, which can lead to dangerous situations like thermal runaway and explosions, thereby reducing the use safety. Therefore, there is an urgent need for a battery box that can reduce the damage caused by impacts, collisions, and other stresses.

### SUMMARY

This application is intended to solve at least one of the technical problems in the related technologies to some extent.

To this end, one objective of this application is to propose a battery box, where the battery box helps to reduce the probability of damage to the battery cells inside the battery box due to impacts, collisions, and other stresses, thereby ensuring high use safety.

Another objective of this application is to propose a battery.

Another objective of this application is to propose a battery mounting frame.

Another objective of this application is to propose a vehicle frame.

Another objective of this application is to propose an electric apparatus.

According to a first aspect, an embodiment of this application provides a battery box, where the battery box includes: a box body; and a first buffer member, arranged on an outer wall surface of the box body, where the first buffer member has a first buffer surface facing away from the interior of the box body, and the first buffer surface is configured as intersecting with both a horizontal plane and a vertical plane perpendicular to the horizontal plane.

In the above technical solution, with the first buffer member arranged on the outer wall surface of the box body, and the surface of the first buffer member facing away from the interior of the box body constructed as the first buffer surface that intersects with both the horizontal plane and the vertical plane, the first buffer member can provide buffering in both the horizontal and vertical directions, thereby helping to reduce the probability of damage to the battery cells inside the battery box from impacts, collisions, and other stresses, and helping to lower the risk of thermal runaway, explosion, and other hazardous situations in the battery cells, thus improving the use safety.

According to a second aspect, an embodiment of this application further provides a battery, including: battery cells and a battery box, the battery box being the above battery box, the battery box having an accommodating space, and the battery cells being placed in the accommodating space.

According to a third aspect, an embodiment of this application further provides a battery mounting frame, where the battery mounting frame is used for forming a mounting space for mounting a battery, the battery mounting frame is provided with a first fitting buffer member on a side wall surface facing the mounting space, the first fitting buffer member has a first fitting buffer surface facing the mounting space, and the first fitting buffer surface is configured as intersecting with both a horizontal plane and a vertical plane perpendicular to the horizontal plane.

In the above technical solution, providing the first fitting buffer member reduces the probability that the battery box cannot be dismounted properly for maintenance after being mounted on the battery mounting frame due to the first buffer member being stuck at the mounting position on the battery mounting frame, thereby helping to reduce the difficulty of dismounting the battery box.

According to a fourth aspect, an embodiment of this application further provides a battery assembly, the battery assembly including the above battery and the above battery mounting frame, where the battery is mounted in the mounting space, and the first buffer member is configured for connecting and fitting with the first fitting buffer member.

In the above technical solution, the first buffer member and the first fitting buffer member fit with each other, which can reduce the probability that the battery box cannot be properly dismounted for maintenance after the battery box is mounted on the battery mounting frame due to the first buffer member being stuck at the first fitting buffer member, thereby helping to reduce the difficulty of dismounting the battery box. In addition, through the fitting between the first buffer member and the first fitting buffer member, the battery can be protected, reducing the probability of damage to the battery due to impacts, collisions, and other stresses, and reducing the probability of dangerous situations such as thermal runaway and explosion occurring with the battery.

According to a fifth aspect, an embodiment of this application further provides a vehicle frame, where the bottom of the vehicle frame is formed with a battery mounting space, a side wall of the battery mounting space is provided with a second fitting buffer member, the second fitting buffer member has a second fitting buffer surface facing the battery mounting space, and the second fitting buffer surface is configured as intersecting with both a horizontal plane and a vertical plane perpendicular to the horizontal plane.

In the above technical solution, providing the second fitting buffer member reduces the probability that the battery box cannot be dismounted properly for maintenance after being mounted on the vehicle frame due to the first buffer member being stuck at the second fitting buffer member, thereby helping to reduce the difficulty of dismounting the battery box.

According to a sixth aspect, an embodiment of this application further provides an electric apparatus, the electric apparatus including the above battery and the above battery mounting frame, where the battery is mounted in the mounting space of the battery mounting frame;
or the electric apparatus includes the above battery and the above vehicle frame, where the battery is mounted in the battery mounting space of the vehicle frame.

For additional aspects and advantages of this application, some will be given in the following description, and some will become apparent in the following description or will be understood in the practice of this application.

### BRIEF DESCRIPTION OF DRAWINGS

FIG. 1 is a schematic structural diagram of a vehicle according to some embodiments of this application;
FIG. 2 is a schematic diagram of a battery assembly according to some embodiments of this application;
FIG. 3 is a schematic diagram of a battery box according to some embodiments of this application;
FIG. 4 is an enlarged view of position I in FIG. 3;
FIG. 5 is a cross-sectional view along A-A in FIG. 4;
FIG. 6 is a cross-sectional view along A-A in FIG. 4;
FIG. 7 is an enlarged view of position H in FIG. 3;
FIG. 8 is a cross-sectional view along B-B in FIG. 7;
FIG. 9 is a schematic diagram of a battery mounting frame according to some embodiments of this application;
FIG. 10 is an enlarged view of position G in FIG. 9;
FIG. 11 is a schematic diagram of a guiding member according to some embodiments of this application; and
FIG. 12 is a cross-sectional view along C-C in FIG. 10.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells or multiple battery modules. The box can prevent liquids or other foreign matter from affecting charging or discharging of the battery cell.

The battery box can be used for mounting battery cells, and the battery cells can provide electric energy to electric devices. For example, the battery box can be mounted in a new energy vehicle, and the battery cells inside the battery box can provide electric energy to the new energy vehicle. When the battery box is subjected to impacts, collisions, and other stresses, the battery cells are prone to damage, which can lead to dangerous situations like thermal runaway and explosions, thereby reducing the use safety.

Based on the above considerations, to solve the technical problem that the battery box cannot reliably protect the battery cells, this application proposes a battery box, including: a box body; and a first buffer member, arranged on an outer wall surface of the box body, where the first buffer member has a first buffer surface facing away from the interior of the box body, and the first buffer surface is configured as intersecting with both a horizontal plane and a vertical plane perpendicular to the horizontal plane.

In this structure of the battery box, with the first buffer member arranged on the outer wall surface of the box body, and the surface of the first buffer member facing away from the interior of the box body constructed as the first buffer surface that intersects with both the horizontal plane and the vertical plane, the first buffer member can provide buffering in both the horizontal and vertical directions, thereby helping to reduce the probability of damage to the battery cells inside the battery box from impacts, collisions, and other stresses, and helping to lower the risk of thermal runaway, explosion, and other hazardous situations in the battery cells, thus improving the use safety.

The battery cell disclosed in the embodiments of this application may be used without limitation in electric apparatuses such as vehicles, ships, or aircrafts. The battery disclosed in this application may be used to constitute a power supply system of that electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of the application being a vehicle 1000 is used as an example for description of the following embodiments.

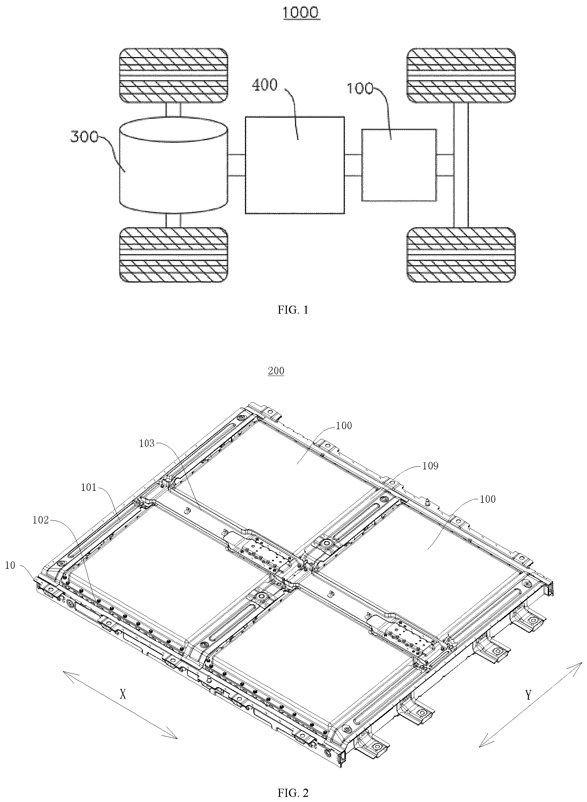

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 400 and a motor 300, where the controller 400 is configured to control the battery 100 to supply power to the motor 300, for example, to satisfy a working electricity need during start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

In battery 100, a plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety constituted by the plurality of battery cells is accommodated in the battery box 2. Certainly, the battery 100 may be formed by a plurality of battery cells being connected in series, parallel, or series-parallel first to form a battery module and then a plurality of battery modules being connected in series, parallel, or series-parallel to form an entirety which is accommodated in the battery box 2. The battery 100 may further include other structures. For example, the battery 100 may further include a busbar configured to implement electrical connection between the plurality of battery cells.

Each battery cell may be a secondary battery or a primary battery, a lithium-sulfur battery, a sodium-ion battery, or a magnesium-ion battery, without being limited thereto. The battery cell may be cylindrical, flat, cuboid, or of other shapes.

It should be noted that in this application, the X direction, Y direction, and Z direction shown are all exemplary directions, and the purpose of showing the X direction, Y direction, and Z direction is to help the reader to understand this application and should not be construed as a limitation of this application.

The following describes the battery box 2 according to the embodiments of this application with reference to FIGs. 2-14.

Referring to FIG. 2, the battery box 2 in the embodiments of this application can be suitable for being mounted on the battery mounting frame 10, achieving connection with an electric apparatus such as the vehicle 1000 shown in FIG. 1 via the battery mounting frame 10, or it may alternatively be connected to the electric apparatus via another mounting fitting structure mounted on the electric apparatus. This application does not limit the specific form of the structure that fits with the battery box 2 described in the embodiments.

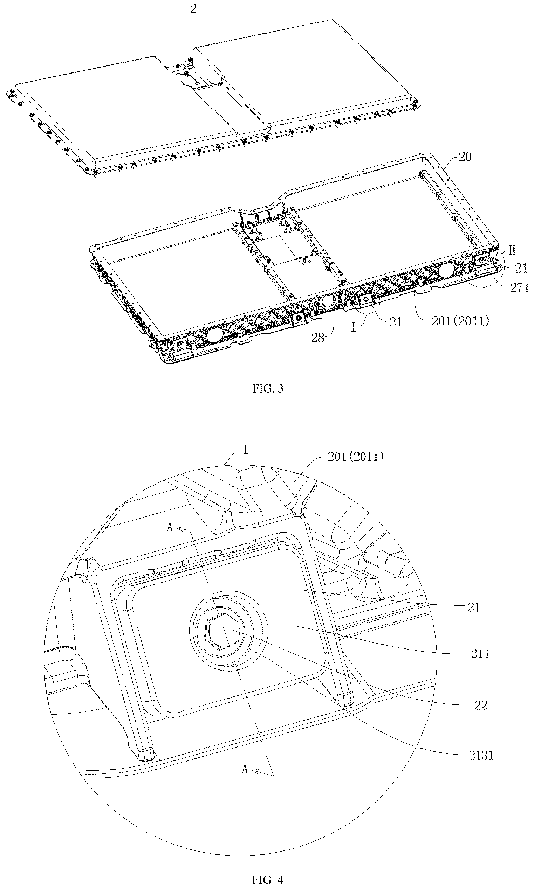

Referring to FIGs. 2 to 4, where FIG. 4 is a locally enlarged view of position I in FIG. 3. In the embodiments of this application, the battery box 2 may include: a box body 20; and a first buffer member 21, arranged on an outer wall surface 201 of the box body 20, where the first buffer member 21 has a first buffer surface 211 facing away from the interior of the box body 20, and the first buffer surface 211 is configured as intersecting with both a horizontal plane and a vertical plane perpendicular to the horizontal plane.

The battery box 2 may be configured for mounting multiple battery cells. With the first buffer member 21 arranged on the outer wall surface 201 of the battery box 2, and a surface of the first buffer member 21 facing away from the interior of the box body 20 constructed as the first buffer surface 211 that intersects with both the horizontal plane and the vertical plane, the first buffer member 21 can provide a buffering effect when the battery box 2 is subjected to impacts, collisions, and other stresses. Specifically, in some optional embodiments of this application, the first buffer member 21 can provide a buffering effect in the horizontal and vertical directions, reducing the probability of deformation of the box body 20 due to impacts, collisions, and other stresses, helping to protect the battery cells and thereby helping to reduce the likelihood of damage to the battery cells from impacts, collisions, and other stresses. This also helps to lower the risk of thermal runaway, explosion, and other hazardous situations in the battery cells.

For example, the first buffer member 21 can deform in both the horizontal and vertical directions to provide a buffering effect.

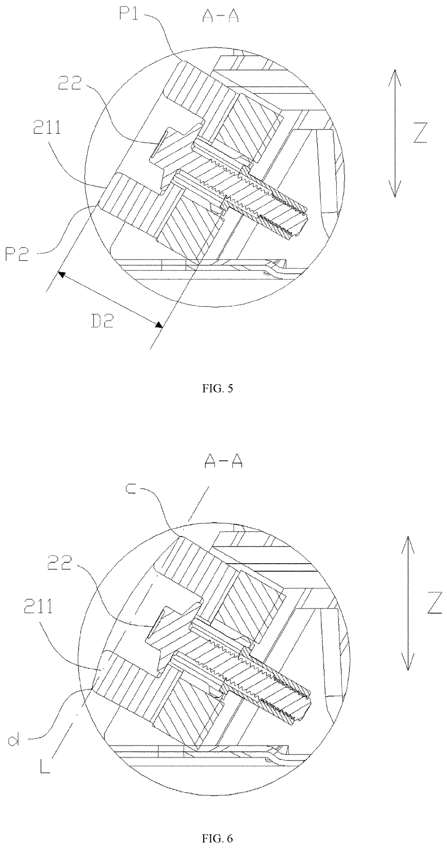

In some optional embodiments of this application, referring to FIG. 5, FIG. 5 is a cross-sectional view in an A-A direction in FIG. 4. As shown in FIG. 5, in the vertical direction, that is, a Z direction shown in FIG. 5, the first buffer surface 211 inclines in a direction leaving the box body 20 (not shown in the figure) from top to bottom.

When a battery box 2 configured with the structure of the first buffer member 21 in the above embodiments is mounted on a battery mounting frame 10 or an electric apparatus, the mounting destination position may be provided correspondingly with a component for fitting with the first buffer member 21, and the first buffer surface 211 can act as an inclined surface guide during the mounting, reducing the difficulty of mounting the battery box 2.

Moreover, after the battery box 2 is mounted on the battery mounting frame 10 or the electric apparatus, the first buffer surface 211 can abut against the corresponding fitting member. Since the first buffer surface 211 is configured as intersecting with both the horizontal plane and the vertical plane, the first buffer surface 211 abutting against the battery mounting frame 10 reduces the probability that the battery box 2 cannot be dismounted properly for maintenance after being mounted on the battery mounting frame 10 due to the first buffer member 21 being stuck at the mounting position on the battery mounting frame 10, thereby helping to reduce the difficulty of dismounting the battery box 2. In the above technical solution, with the first buffer member 21 arranged on the outer wall surface 201 of the box body 20, and the surface of the first buffer member 21 facing away from the interior of the box body 20 constructed as the first buffer surface 211 that intersects with both the horizontal plane and the vertical plane, the first buffer member 21 can provide buffering in both the horizontal and vertical directions, thereby helping to reduce the probability of damage to the battery cells inside the battery box 2 from impacts, collisions, and other stresses, and helping to lower the risk of thermal runaway, explosion, and other hazardous situations in the battery cells, thus improving the use safety.

According to some embodiments of this application, still referring to FIGs. 2 to 5, the box body 20 includes a top wall and a bottom wall, the first buffer surface 211 having a first end a closer to the interior of the box body 20 and a second end b farther from the interior of the box body 20, where the first end a is arranged closer to the top wall than the second end b, and on the first buffer surface 211, a position closer to the second end is closer to the bottom wall.

The box body 20 may include the top wall and the bottom wall. In the Z direction (that is, in the vertical direction) shown in FIG. 5, the top wall may be located above the bottom wall. The first buffer member 21 may have the first buffer surface 211, and the first buffer surface 211 may have the first end P1 closer to the interior of the box body 20 and the second end P2 farther from the interior of the box body 20, where the first end P1 is closer to the top wall of the box body 20 than the second end P2, and on the first buffer surface 211, a position closer to the second end P2 is closer to the bottom wall of the box body 20.

In the above technical solution, with the first buffer surface 211 arranged as a structure that the first end P1 is closer to the top wall than the second end P2 and on the first buffer surface 211, a position closer to the second end P2 is closer to the bottom wall, such that buffering in both the horizontal and vertical directions is effectively implemented, helping to reduce the probability of damage to the battery cells inside the battery box 2 due to impacts, collisions, and other stresses. In addition, such configuration can reduce the probability that the battery box 2 cannot be properly dismounted for maintenance after being mounted on the electric apparatus due to the first buffer member 21 being stuck at the mounting position on the electric apparatus, thereby helping to reduce the difficulty of dismounting the battery box 2.

According to some embodiments of this application, as shown in FIG. 5, the first buffer surface 211 is configured as an inclined surface intersecting with the horizontal plane and the vertical plane.

Such configuration enables the first buffer member 21 to play a buffering effect in the horizontal and vertical directions. In addition, configuring the first buffer surface 211 as an inclined surface intersecting with the horizontal plane and the vertical plane can reduce the processing difficulty of the first buffer surface 211, thereby improving the processing efficiency of the first buffer surface 211. In some optional embodiments of this application, in the Z direction (that is, in the vertical direction) shown in FIG. 5, from the first end P1 to the second end P2, the first buffer surface 211 may incline in a direction leaving the box body 20, and the first buffer surface 211 may intersect with the horizontal plane and the vertical plane.

In the above technical solution, with the first buffer surface 211 constructed as an inclined surface intersecting with the horizontal plane and the vertical plane, regardless of whether it is subjected to impacts, collisions, and other stresses from the horizontal direction or from the vertical direction, the first buffer surface 211 can play a buffering effect to protect the battery cells. In addition, such configuration can reduce the probability that the battery box 2 cannot be properly dismounted for maintenance after being mounted on the electric apparatus due to the first buffer member 21 being stuck at the mounting position on the electric apparatus, thereby helping to reduce the difficulty of dismounting the battery box 2.

According to some embodiments of this application, an included angle between the first buffer surface 211 and the vertical plane may be less than or equal to 5°.

The first buffer member 21 may have the first buffer surface 211, the first buffer surface 211 may be configured as an inclined surface, and the included angle between the inclined surface and the vertical plane may be less than or equal to 5°. In other words, the included angle between the inclined surface and the vertical plane may be, but is not limited to, 1°, 2°, 3°, 4°, and 5°.

In the above technical solution, with the first buffer surface 211 constructed as a structure that forms an included angle less than or equal to 5° with the vertical plane, such that an inclination angle of the first buffer surface 211 can be reasonable, effectively achieving buffering in both the horizontal and vertical directions. In addition, when the battery box 2 is being mounted on the electric apparatus, the first buffer surface 211 can also play a guiding role to reduce the difficulty of mounting the battery box 2.

According to some embodiments of this application, still referring to FIG. 6, the first buffer surface 211 may be configured as a curved surface.

The first buffer member 21 may have the first buffer surface 211, and the first buffer surface 211 may be configured as a curved surface. In some optional embodiments of this application, the first buffer surface 211 may be configured as a circular curved surface. In some optional embodiments of this application, the first buffer surface 211 may be configured as an elliptical curved surface.

In the above technical solution, with the first buffer surface 211 constructed as a curved surface, regardless of whether it is subjected to impacts, collisions, and other stresses from the horizontal direction or from the vertical direction, the first buffer surface 211 can play a buffering effect to protect the battery cells. In addition, such configuration can reduce the probability that the battery box 2 cannot be properly dismounted for maintenance after being mounted on the electric apparatus due to the first buffer member 21 being stuck at the mounting position on the electric apparatus, thereby helping to reduce the difficulty of dismounting the battery box 2.

According to some embodiments of this application, a direction in which the first buffer surface 211 protrudes faces away from the box body 20.

The first buffer member 21 may have the first buffer surface 211, and the first buffer surface 211 may be configured as a curved surface. In addition, the direction in which the curved surface protrudes may face away from the box body 20. In other words, the curved surface may be arranged as protruding in a direction leaving the box body 20.

In the above technical solution, with the first buffer surface 211 constructed as a curved surface protruding away from the box body 20, regardless of whether it is subjected to impacts, collisions, and other stresses from the horizontal direction or from the vertical direction, the first buffer surface 211 can play a buffering effect to protect the battery cells. In addition, such configuration can further reduce the probability of the battery box 2 getting stuck with the electric apparatus.

According to some embodiments of this application, the first buffer surface 211 is configured as a curved surface, a direction in which the curved surface protrudes faces away from the box body 20, and the first buffer surface 211 includes a first edge c closer to the interior of the box body 20 and a second edge d farther from the interior of the box body 20, an included angle between a plane (parallel to the dashed line L shown in the figure) containing both the first edge and the second edge and the vertical plane being less than or equal to 5°.

The first buffer member 21 may have the first buffer surface 211, and the first buffer surface 211 may be configured as a curved surface. In some optional embodiments of this application, the first buffer surface 211 may be configured as a circular curved surface. In some optional embodiments of this application, the first buffer surface 211 may be configured as an elliptical curved surface. In addition, the direction in which the curved surface protrudes may be away from the box body 20. In other words, the curved surface may be arranged as protruding in the direction leaving the box body 20.

The curved surface may include the first edge c closer to the interior of the box body 20, and may further include the second edge d farther from the interior of the box body 20. The included angle between the plane containing both the first edge c and the second edge d and the vertical plane may be less than or equal to 5°. It should be explained that each of the first edge c and the second edge d may be understood as a line, and the two lines can determine a plane, which is the plane containing both the first edge c and the second edge d. The included angle between this plane and the vertical plane may be less than or equal to 5°. In other words, the included angle between this plane and the vertical plane may be, but is not limited to, 1°, 2°, 3°, 4°, and 5°.

In the above technical solution, with the curved surface constructed as a structure that the included angle between the plane containing both the first edge c and the second edge d and the vertical plane is less than or equal to 5°, such that an inclination angle of the first buffer surface 211 can be reasonable, effectively achieving buffering in the horizontal and vertical directions. In addition, when the battery box 2 is being mounted on the electric apparatus, the first buffer surface 211 can also play a guiding role to reduce the difficulty of mounting the battery box 2.

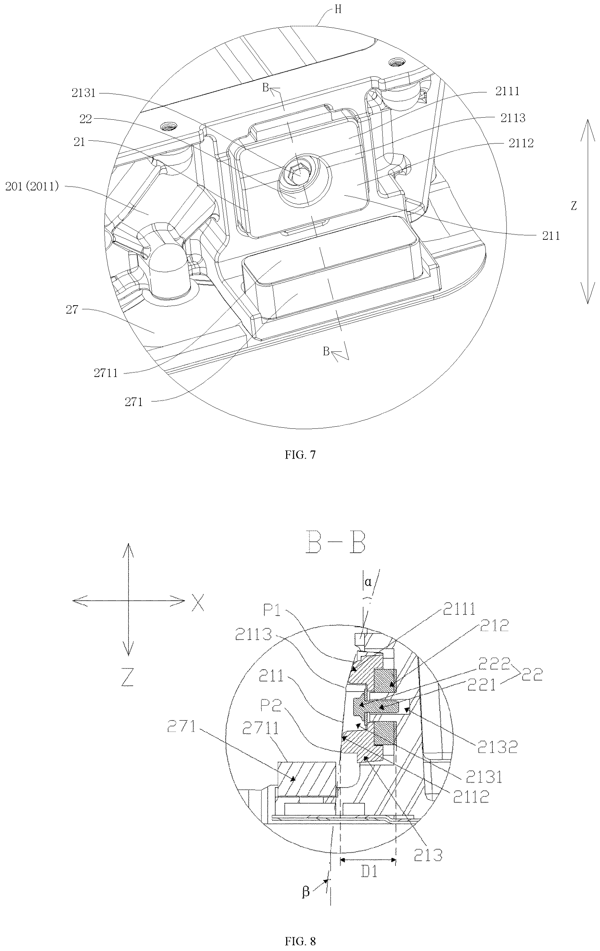

According to some embodiments of this application, as shown in FIGs. 7 and 8, where FIG. 7 is a locally enlarged view of position H in FIG. 3, FIG. 8 is a cross-sectional view along the direction B-B in FIG. 7, and the first buffer surface 211 includes multiple segment surfaces arranged sequentially in a direction from the first end P1 to the second end P2.

The first buffer member 21 may have the first buffer surface 211, and the first buffer surface 211 may include multiple segment surfaces, where the multiple segment surfaces may be arranged sequentially in the direction from the first end P1 to the second end P2. In some optional embodiments of this application, the first buffer surface 211 may include two segment surfaces, where the two segment surfaces may be arranged sequentially in the direction from the first end P1 to the second end P2. In some optional embodiments of this application, as shown in FIG. 8, the first buffer surface 211 may include three segment surfaces, where the three segment surfaces may be arranged sequentially in the direction from the first end P1 to the second end P2.

In some optional embodiments of this application, each of the multiple segment surfaces may be constructed as a curved surface, and the multiple curved surfaces may have a same curvature, or at least two of the multiple curved surfaces have different curvatures.

In some optional embodiments of this application, each of the multiple segment surfaces may be constructed as an inclined surface, and the multiple inclined surfaces may have a same inclination degree, or at least two of the multiple inclined surfaces may have different inclination degrees.

In some optional embodiments of this application, part of the multiple segment surfaces may be constructed as curved surfaces, and another part of the multiple segment surfaces may be constructed as inclined surfaces.

In the above technical solution, with the first buffer surface 211 constructed as a structure including multiple segment surfaces arranged sequentially, such that different surface structures can be adopted at different positions on the first buffer surface 211, which helps to improve the buffering effect of the first buffer member 21. In addition, when the battery box 2 is being mounted on another structure (such as the battery mounting frame 10), the structure of multiple segment surfaces allows smooth docking between the battery box 2 and the electric apparatus. In addition, such configuration can also reduce the probability that the battery box 2 cannot be properly dismounted for maintenance after the battery box 2 is mounted on the electric apparatus due to the first buffer member 21 being stuck at the mounting position on the electric apparatus, thereby helping to reduce the difficulty of dismounting the battery box 2.

According to some embodiments of this application, as shown in FIG. 8, the first buffer surface 211 includes a first segment surface 2111 and a second segment surface 2112, the first segment surface 2111 being closer to the first end P1 than the second segment surface 2112, with an included angle between the first segment surface 2111 and the vertical plane being α, and an included angle between the second segment surface 2112 and the vertical plane being β, where α and β satisfy: α≥β.

The first buffer member 21 may have the first buffer surface 211, and the first buffer surface 211 may include the first segment surface 2111 and the second segment surface 2112. The second segment surface 2112 may be adjacent to the first segment surface 2111, and in a height direction (that is, the Z direction shown in FIG. 8) of the battery box 2, the second segment surface 2112 may be located below the first segment surface 2111. In other words, the second segment surface 2112 may be located on a side of the first segment surface 2111 farther from an upper end of the first buffer surface 211. It can also be understood as that, compared with the first segment surface 2111, the second segment surface 2112 is closer to a lower end of the first buffer surface 211. In addition, the inclination angle of the second segment surface 2112 may be less than or equal to the inclination angle of the first segment surface 2111.

The included angle between the first segment surface 2111 and the vertical plane may be α, and the included angle between the second segment surface 2112 and the vertical plane may be β, where α and β may satisfy the relationship: α≥β, that is, β may be less than or equal to α.

It can be understood that with the second segment surface 2112 arranged on the side of the first segment surface 2111 farther from the upper end of the first buffer surface 211, in other words, with the first segment surface 2111 arranged at a position closer to the first end P1 than the second segment surface 2112, during the mounting, the first segment surface 2111 can contact another structure (such as the battery mounting frame 10) earlier than the second segment surface 2112, providing a good guiding effect.

In the above technical solution, during the process of mounting the battery box 2 in another structure (such as the battery mounting frame 10), the first segment surface 2111 can abut against the another structure (such as the battery mounting frame 10) earlier than the second segment surface 2112, thereby reliably guiding the mounting of the battery box 2, and reducing the difficulty of mounting the battery box 2. In addition, the first segment surface 2111 being arranged as having an inclination angle greater than or equal to the inclination angle of the second segment surface 2112 helps to improve the guiding effect of the first segment surface 2111.

According to some embodiments of this application, as shown in FIG. 7, the first buffer surface 211 further includes a first transition surface 2113, the first transition surface 2113 being a curved surface located between the first segment surface 2111 and the second segment surface 2112.

The first buffer member 21 may have the first buffer surface 211, and the first buffer surface 211 may further include the first transition surface 2113. The first transition surface 2113 may be constructed as a circular curved surface, and the first transition surface 2113 may alternatively be constructed as an elliptical curved surface. In the Z direction shown in FIG. 6, the first transition surface 2113 may be located between the first segment surface 2111 and the second segment surface 2112. In some optional embodiments of this application, one end of the first transition surface 2113 may be connected to the first segment surface 2111, and another end of the first transition surface 2113 may be connected to the second segment surface 2112. Specifically, in the height direction of the battery box 2, the upper end of the first transition surface 2113 may be connected to the lower end of the first segment surface 2111, and the lower end of the first transition surface 2113 may be connected to the upper end of the second segment surface 2112.

During the process of mounting the battery box 2 on the another structure, the first segment surface 2111 may first abut against the another structure (such as the battery mounting frame 10), then the first segment surface 2111 and the first transition surface 2113 may abut against the another structure (such as the battery mounting frame 10), and then the first segment surface 2111, the first transition surface 2113, and the second segment surface 2112 may abut against the another structure (such as the battery mounting frame 10).

In the above technical solution, with the first transition surface 2113 formed between the second segment surface 2112 and the first segment surface 2111, a surface between the second segment surface 2112 and the first segment surface 2111 can be constructed as a curved surface, allowing for smooth connection between the second segment surface 2112 and the first transition surface 2113 and smooth connection between the first segment surface 2111 and the first transition surface 2113. This helps to reduce the difficulty of dismounting and mounting the battery box 2 and helps to improve the efficiency of dismounting and mounting the battery box 2.

According to some embodiments of this application, as shown in FIGs. 4 to 8, the battery box 2 may further include a fastener 22, and the fastener 22 may be configured for fixing the first buffer member 21 to the box body 20.

The fastener 22 may be fixedly connected to the box body 20, and the fastener 22 can mount the first buffer member 21 on the box body 20. The fastener 22 may be constructed as, but is not limited to, a screw, a bolt, a rivet, and the like. In some optional embodiments of this application, the box body 20 may be provided with a threaded hole, and the fastener 22 may have external threads. The fastener 22 may come into threaded connection with the internal threads of the threaded hole in the box body 20 through the external threads. In addition, part of the structure of the fastener 22 and part of the structure of the box body 20 can clamp and fix the first buffer member 21, to mount the first buffer member 21 on the box body 20 (as shown in FIG. 6). In some other embodiments of this application, the first buffer member 21 may alternatively be mounted on the box body 20 by snap-fit connection, bonding, and the like. This application is not limited to using the fastener 22 to mount and fix the first buffer member 21.

In some optional embodiments of this application, the box body 20 and the first buffer member 21 may be riveted together using a rivet.

In some optional embodiments of this application, the box body 20 may be provided with a threaded hole, and the first buffer member 21 may also be provided with a threaded hole. The fastener 22 may have external threads, and the fastener 22 may come into threaded connection with the internal threads of the threaded hole in the box body 20 through the external threads. In addition, the fastener 22 may come into threaded connection with the internal threads of the threaded hole in the first buffer member 21 through the external threads, to mount the first buffer member 21 on the box body 20.

In the above technical solution, through the fastener 22, the box body 20 and the first buffer member 21 can be firmly mounted together, which helps to ensure the mounting firmness of the first buffer member 21.

According to some embodiments of this application, as shown in FIGs. 4, 7, and 8, the first buffer surface 211 may be recessed to form a mounting groove 2131, and a bottom wall of the mounting groove 2131 may be provided with a mounting hole 2132. The fastener 22 may pass through the mounting hole 2132 to connect with the box body 20, and at least part of the fastener 22 is located within the mounting groove 2131.

The first buffer member 21 may have the first buffer surface 211, and the first buffer surface 211 may be formed with the mounting groove 2131. The mounting groove 2131 may be recessed towards the interior of the first buffer member 21. The fastener 22 may have a rod portion 211 and a head portion 222. The rod portion 211 can pass through the first buffer member 21 to connect with the box body 20. In some optional embodiments of this application, the rod portion 211 and the head portion 222 may be integrally formed, and a diameter of the head portion 222 may be greater than a diameter of the rod portion 211.

The bottom wall of the mounting groove 2131 may be provided with the mounting hole 2132. The box body 20 may have a fitting part, and the fitting part may pass through the mounting hole 2132. The fitting part may be opened with a threaded hole, and the threaded hole may be formed with internal threads. The rod portion 211 may be formed with external threads, and the rod portion 211 may be disposed in the threaded hole and threadably connected with the fitting part. The head portion 222 may abut against the bottom wall of the mounting groove 2131 to firmly mount the first buffer member 21 on the box body 20. In addition, at least part of the fastener 22 may be located within the mounting groove 2131.

In the above technical solution, the box body 20 and the first buffer member 21 can be firmly mounted together, which can enhance the connection firmness between the box body 20 and the first buffer member 21. In addition, this allows for a reasonable structural form of the first buffer member 21.

According to some embodiments of this application, as shown in FIGs. 4, 7, and 8, along a depth direction of the mounting groove 2131, an end of the fastener 22 away from the box body 20 is lower than an opening of the mounting groove 2131.

Along the depth direction of the mounting groove 2131, the end of the fastener 22 away from the box body 20 is not higher than the opening of the mounting groove 2131. In some optional embodiments of this application, the fastener 22 may have the rod portion 221 and the head portion 222. The rod portion 221 may pass through the first buffer member 21 to connect with the box body 20, and the end of the head portion 222 away from the box body 20 is lower than the opening of the mounting groove 2131. In the above technical solution, with the end of the fastener 22 away from the box body 20 being made lower than the opening of the mounting groove 2131, the probability of the fastener 22 scraping against the another structure (such as the battery mounting frame 10) during the dismounting and mounting of the battery box 2 can be reduced, thereby reducing the probability of the another structure (such as the battery mounting frame 10) being scratched.

According to some embodiments of this application, as shown in FIGs. 7 and 8, the first buffer member 21 may include an elastic member 212 and a wear-resistant member 213, the elastic member 212 being located between the box body 20 and the wear-resistant member 213.

The first buffer member 21 may include the elastic member 212 and the wear-resistant member 213, and the elastic member 212 may be located between the wear-resistant member 213 and the box body 20.

The elastic member 212 and the wear-resistant member 213 may be connected. In some optional embodiments of this application, the elastic member 212 and the wear-resistant member 213 may be connected by, but not limited to, snap-fit, bonding, injection molding, and the like; or, the elastic member 212 and the wear-resistant member 213 may alternatively abut against each other (for example, the elastic member 212 and the wear-resistant member 213 may abut against each other through the fastener 22). In addition, the elastic member 212 may be located between the wear-resistant member 213 and the box body 20. In other words, compared with the wear-resistant member 213, the elastic member 212 is closer to the box body 20. It can be understood that the first buffer surface 211 may be formed on the wear-resistant member 213. Specifically, the first buffer surface 211 may be formed on a side of the wear-resistant member 213 away from the elastic member 212.

The elastic member 212 and the wear-resistant member 213 may each be provided with a mounting hole 2132.

In some optional embodiments of this application, a material of the elastic member 212 may be, but is not limited to, rubber, polyurethane, and the like. In some optional embodiments of this application, a material of the wear-resistant member 213 may be but is not limited to POM (polyoxymethylene) - Polyoxymethylene(Polyformaldehyde), PBT (polybutylene terephthalate) - polybutylene terephthalate, and the like.

When the first buffer surface 211 abuts against the another structure (such as the battery mounting frame 10), the wear-resistant member 213 will be stressed and compress the elastic member 212. The elastic member 212 can deform and absorb the compressive force. In addition, when the battery 100 is subjected to an impact, the elastic member 212 can deform and absorb the impact force.

In the above technical solution, with the first buffer member 21 constructed as a structure including the elastic member 212 and the wear-resistant member 213, and the elastic member 212 arranged between the wear-resistant member 213 and the box body 20, such that the elastic member 212 can absorb the compressive force, received by the wear-resistant member 213, from the another structure (such as the battery mounting frame 10). In addition, the elastic member 212 can absorb the impact force received by the battery box 2, reducing the probability of deformation of the box body 20 due to compressive force and impact force, effectively protecting the battery cells inside the box body 20.

According to some embodiments of this application, as shown in FIGs. 3, 4, and 7, the box body 20 has a side frame 28, and the first buffer member 21 may be arranged on an outer wall surface 201 of the side frame 28.

The box body 20 may have the side frame 28, and the outer wall surface 201 of the side frame 28 may be arranged with the first buffer member 21. The first buffer member 21 has the first buffer surface 211 facing away from the interior of the box body 20. When the battery box 2 is subjected to impacts, collisions, and other stresses, the first buffer member 21 can play a buffering effect.

In the above technical solution, with the first buffer member 21 arranged on the outer wall surface 201 of the side frame 28 of the box body 20, the probability of deformation of the box body 20 due to impacts, collisions, and other stresses can be reduced, which helps to protect the battery cells, thereby helping to reduce the probability of damage to the battery cells due to impacts, collisions, and other stresses. This helps to reduce the probability of dangerous situations such as thermal runaway and explosion.

According to some embodiments of this application, as shown in FIG. 3, the first buffer member 21 is configured as multiple, and the multiple first buffer members 21 are arranged at intervals along the side frame 28.

The quantity of the first buffer members 21 may be configured as multiple, and the multiple first buffer members 21 may be arranged at intervals along the side frame 28. For example, the multiple first buffer members 21 may be arranged at intervals along a Y direction shown in FIG. 2, or may be arranged at intervals along an X direction shown in FIG. 2, or the multiple first buffer members 21 may be arranged at intervals along a circumferential direction of the side frame 28.

In the above technical solution, the first buffer member 21 is configured as multiple, which helps more to protect the battery cells, thereby helping more to reduce the probability of damage to the battery cells due to impacts, collisions, and other stresses. This helps to reduce the probability of dangerous situations such as thermal runaway and explosion.

According to some embodiments of this application, as shown in FIG. 3, the side frame 28 is rectangular, and at least part of the multiple first buffer members 21 are arranged at positions near four corners of the side frame 28, and/or at least part of the multiple first buffer members 21 are arranged at positions near midpoints of sides of the side frame 28.

The quantity of the first buffer members 21 may be configured as multiple, and the side frame 28 may be constructed as rectangular. Specifically, a plane can be defined, where the plane is parallel to the side frame 28, and an orthographic projection of the side frame 28 on this plane may be rectangular, or the orthographic projection of the side frame 28 on this plane may be square. At least part of the multiple first buffer members 21 may be arranged at positions near the four corners of the side frame 28. In other words, the orthographic projections of at least part of the multiple first buffer members 21 on this plane may be located at positions near the four corners of the rectangle.

Or, at least part of the multiple first buffer members 21 may be arranged at positions near the midpoints of the sides of the side frame 28. In other words, at least part of the multiple first buffer members 21 may be arranged at positions near a middle portion of the side frame 28.

Or, part of the multiple first buffer members 21 may be arranged at positions near the four corners of the side frame 28, and part of the multiple first buffer members 21 may be arranged at positions near the midpoints of the sides of the side frame 28.

In the above technical solution, the multiple first buffer members 21 can be arranged at reasonable positions, which helps more to protect the battery cells, thereby helping more to reduce the probability of damage to the battery cells due to impacts, collisions, and other stresses. This helps to reduce the probability of dangerous situations such as thermal runaway and explosion.

According to some embodiments of this application, as shown in FIG. 3, at least two of the multiple first buffer members 21 are provided with different first buffer surfaces 211, with one located at a position near one of the four corners of the side frame 28 and the other located at a position near one of the midpoints of the sides of the side frame 28.

In some optional embodiments of this application, at least two of the multiple first buffer members 21 are provided with first buffer surfaces 211 of different structures. In addition, the first buffer member 21 having one type of first buffer surface 211 is located at a position near one of the four corners of the side frame 28, and the first buffer member 21 having another type of first buffer surface 211 is located at a position near one of the midpoints of the sides of the side frame 28.

Two of the multiple first buffer members 21 have first buffer surfaces 211 of different structures. For example, one may be an inclined surface structure, and the other may be a curved surface; alternatively, one may be an inclined surface structure, and the other may be a multi-segment surface structure. In addition, one of the first buffer members 21 is located at a position near one of the four corners of the side frame 28, and the other of the first buffer members 21 is located at a position near one of the midpoints of the sides of the side frame 28. For example, the first buffer surface 211 of the first buffer member 21 located at the position near one of the four corners may be configured as the multi-segment surface structure shown in FIGs. 7 and 8, and the first buffer surface 211 of the first buffer member 21 located near one of the midpoints of the sides of the side frame 28 may be configured as the inclined surface structure shown in FIGs. 4 and 5.

In the above technical solution, at least two of the multiple first buffer members 21 are provided with first buffer surfaces 211 of different structures, and the first buffer members 21 with different first buffer surfaces 211 can be arranged in different positions. This helps to correspondingly design the specific structure of the first buffer member 21 according to the different design requirements for different positions, providing more reliable buffering protection for the battery box 2.

According to some embodiments of this application, as shown in FIGs. 7 and 8, the battery box 2 further includes a second buffer member 271. The second buffer member 271 is arranged on an outer wall surface 201 of the box body 20, the second buffer member 271 has a second buffer surface 2711 facing away from the box body 20, and the second buffer surface 2711 is configured as being parallel to the horizontal plane or the vertical plane. FIGs. 7 and 8 use the second buffer surface 2711 being parallel to the horizontal plane as an example.

The second buffer member 271 may be arranged on the outer wall surface 201 of the box body 20, and the outer wall surface 201 of the box body 20 may have a first extension portion 27. The second buffer member 271 has the second buffer surface 2711, and the second buffer surface 2711 may be arranged as facing away from the box body 20 (as shown in FIG. 7, the second buffer surface 2711 may be arranged as facing away from the first extension portion 27 of the box body 20). The second buffer surface 2711 may be parallel to the horizontal plane, or the second buffer surface 2711 may be parallel to the vertical plane. The second buffer member 271 with the second buffer surface 2711 parallel to the horizontal plane can buffer stresses from the vertical direction. The second buffer member 271 with the second buffer surface 2711 parallel to the vertical plane can buffer stresses from the horizontal direction.

In the above technical solution, the second buffer member 271 is provided, so that the buffering capacity in the horizontal or vertical direction can be enhanced on the basis of providing the first buffer member 21, which can more effectively protect the battery cells inside the box body 20, helping to reduce the probability of damage to the battery cells due to impacts, collisions, and other stresses.

According to some embodiments of this application, as shown in FIGs. 7 and 8, the outer wall surface 201 may include a first outer wall surface 2011, the second buffer surface 2711 may be configured as being parallel to the horizontal plane, the first buffer member 21 is configured as multiple, and at least one of the first buffer members 21 and the second buffer member 21 are arranged side by side on the first outer wall surface 2011 along a first direction, the first direction being a direction perpendicular to the first outer wall surface 2011. The second buffer surface 2711 of the second buffer member 271 may be configured as being parallel to the horizontal plane, the first buffer member 21 may be configured as multiple, and at least two of the multiple first buffer members 21 may be provided with different first buffer surfaces 211. The at least one of the first buffer members 21 and the second buffer member 21 may both be arranged on the first outer wall surface 2011, and the at least one first buffer member 21 and the second buffer member 21 may be arranged side by side along the first direction, the first direction being a direction perpendicular to the first outer wall surface 2011. In some optional embodiments of this application, the first direction may be the X direction shown in FIG. 8.

In the above technical solution, the second buffer member 271 may be configured to improve the buffering effect in the vertical direction on the basis of the first buffer member 21. The first buffer member 21 and the second buffer member 271 arranged side by side may be used to be arranged at positions where the box body 2 experiences poor working conditions due to vibration impacts, such as corner positions or middle positions. Compared to the situation in which only the first buffer member 21 is used, the wear rate of the first buffer member 21 can be reduced, the service life of the parts can be prolonged, and the number of times of maintenance or part replacement during use can be reduced.

According to some embodiments of this application, as shown in FIGs. 3 to 5 and FIGs. 7 and 8, the first buffer member 21 and the second buffer member 271 arranged side by side may be located on the first outer wall surface 2011 at a position near an end of the first outer wall surface 2011, and at least another one of the multiple first buffer members 21 may be located on the first outer wall surface 2011 at a position near a middle portion of the first outer wall surface 2011, where a maximum dimension of the first buffer member 21 arranged side by side with the second buffer member 271 along the first direction on the first outer wall surface 2011 is a first dimension D1, and a maximum dimension of the first buffer member 21 located at a position near the middle portion of the first outer wall surface 2011 along the first direction is a second dimension D2, the first dimension D1 being smaller than the second dimension D2.

The first buffer member 21 may be configured as multiple, and at least one of the first buffer members 21 and the second buffer member 21 are arranged side by side on the first outer wall surface 2011 along the first direction. The first buffer member 21 and the second buffer member 271 arranged side by side may be located at a position near an end of the first outer wall surface 2011, and at least another one of the multiple first buffer members 21 may be located on the first outer wall surface 2011 at a position near a middle portion of the first outer wall surface 2011.

The maximum dimension of the first buffer member 21 arranged side by side with the second buffer member 271 along the first direction on the first outer wall surface 2011 is the first dimension D1, and the maximum dimension of the first buffer member 21 located at a position near a middle portion of the first outer wall surface 2011 along the first direction is the second dimension D2, the first dimension D1 being smaller than the second dimension D2. Due to the limited battery mounting space, when the first buffer member 21 and the second buffer member 271 are arranged side by side along the first direction, the first buffer member 21 cannot be provided with a large width dimension, thereby reserving part of the space in the width direction for arranging the second buffer member 271. When the first buffer member 21 does not need to be arranged side by side with the second buffer member 271 along the first direction, the first buffer member 21 can be provided with a larger width dimension and when the first buffer surface 211 is an inclined surface structure, it can be provided with a larger inclination angle relative to the vertical plane.

In the above technical solution, the maximum dimension D1 of the first buffer member 21 arranged side by side with the second buffer member 271 along the first direction is smaller than the maximum dimension D2 of the first buffer member 21 arranged at the middle portion position of the first outer wall surface 2011. This can reduce the overall maximum dimension of the battery box 2 along the first direction, reducing the space occupied by the first buffer member 21 and the second buffer member 271 along the first direction of the battery box 2 on the basis of achieving the buffering function of the battery box 2 in both the horizontal and vertical directions through the buffer members.

According to some embodiments of this application, this application further provides a battery 100, where the battery 100 includes battery cells and the above battery box 2, the battery box 2 having an accommodating space, and the battery cells being placed in the accommodating space.

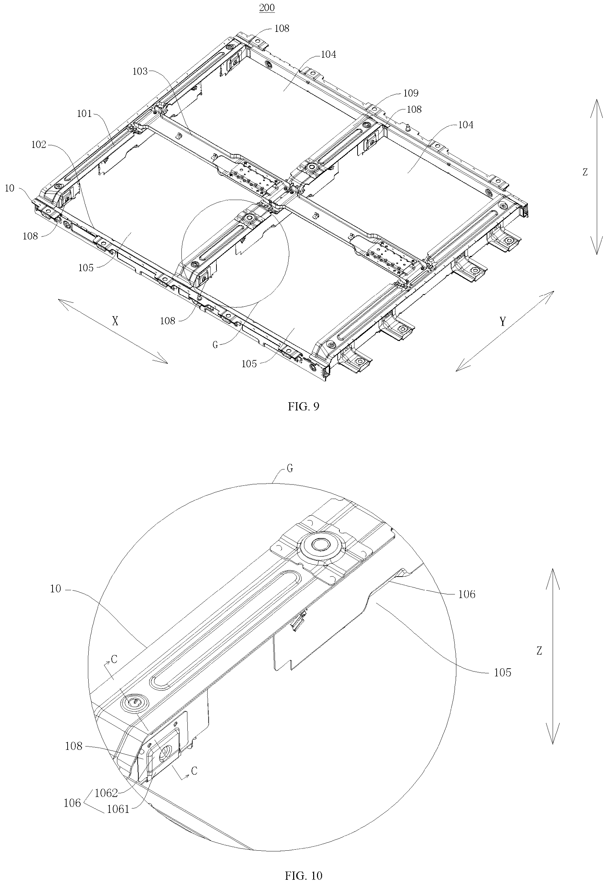

According to some embodiments of this application, referring to FIGs. 9 and 10, FIG. 10 is a locally enlarged view of position G in FIG. 9. This application further provides a battery mounting frame 10, where the battery mounting frame 10 is configured for forming a mounting space 104 for mounting a battery, the battery mounting frame 10 is provided with a first fitting buffer member 108 on a side wall surface facing the mounting space 104, the first fitting buffer member 108 has a first fitting buffer surface 106 facing the mounting space 104, and the first fitting buffer surface 106 is configured as intersecting with both a horizontal plane and a vertical plane perpendicular to the horizontal plane.

The battery mounting frame 10 is formed with the mounting space 104 for mounting the battery 100, and the mounting space 104 may have an open mounting opening 105. The battery 100 may be mounted in the mounting space 104 through the mounting port 105. The battery mounting frame 10 may be provided with the first fitting buffer member 108 on the side wall surface facing the mounting space 104. The first fitting buffer member 108 may have the first fitting buffer surface 106, and the first fitting buffer surface 106 is configured as intersecting with the horizontal plane and the vertical plane. The horizontal plane is perpendicular to the vertical plane, and the first fitting buffer surface 106 is arranged as facing the mounting space 104.

In some optional embodiments of this application, the battery mounting frame 10 may include two first beam bodies 101 and two second beam bodies 102, and the first beam bodies 101 and the second beam bodies 102 may be connected together. For example, the battery mounting frame 10 may include two first beam bodies 101 and two second beam bodies 102. The two first beam bodies 101 may be arranged at intervals along the X direction shown in FIG. 9, and the two first beam bodies 101 may be arranged in parallel. The two second beam bodies 102 may be arranged at intervals along the Y direction shown in FIG. 9, and the two second beam bodies 102 may be arranged in parallel. The two first beam bodies 101 and the two second beam bodies 102 may be sequentially connected end-to-end. Specifically, each of two ends of one of the first beam bodies 101 may be connected to one end of each of the two second beam bodies 102; and each of two ends of the other first beam body 101 may be connected to the other end of each of the two second beam bodies 102. In addition, at least part of the structure of the first beam body 101 may be located above the second beam body 102, thereby forming a mounting space 104.

Or, as shown in FIG. 9, the battery mounting frame 10 may include three first beam bodies 101 and two second beam bodies 102. The three first beam bodies 101 may be arranged at intervals along the X direction shown in FIG. 9, and the three first beam bodies 101 may be arranged in parallel. The two second beam bodies 102 may be arranged at intervals along the Y direction shown in FIG. 9, and the two second beam bodies 102 may be arranged in parallel.

Two of the three first beam bodies 101 and the two second beam bodies 102 may be sequentially connected end-to-end. Specifically, each of two ends of one of the first beam bodies 101 may be connected to one end of each of the two second beam bodies 102; and each of two ends of the other first beam body 101 may be connected to the other end of each of the two second beam bodies 102. At least part of the structure of the first beam body 101 may be located above the second beam bodies 102. In addition, the third first beam body 101 may be arranged between the other two first beam bodies 101, and one end of the third first beam body 101 may be connected to a middle portion of one of the second beam bodies 102, and the other end of the third second beam body 102 may be connected to a middle portion of the other second beam body 102, thereby forming two mounting spaces 104.

In some optional embodiments of this application, as shown in FIG. 9, the battery mounting frame 10 may further include at least one third beam body 103, and an extending direction of the third beam body 103 may be the same as an extending direction of the second beam body 102. The third beam body 103 may be arranged above the first beam body 101, and two ends of the third beam body 103 may be connected to middle portions of the two first beam bodies 101, respectively (the two first beam bodies 101 are connected to ends of the second beam bodies 102). In addition, a middle portion of the third beam body 103 may also be connected to a middle portion of another first beam body 101 (the another first beam body 101 is connected to middle portions of the second beam bodies 102).

In some optional embodiments of this application, the first fitting buffer member 108 may be arranged on the first beam body 101. In some optional embodiments of this application, the first fitting buffer member 108 may be arranged on the second beam body 102. In some optional embodiments of this application, the first fitting buffer member 108 may be arranged on the first beam body 101 and the second beam body 102.

In some optional embodiments of this application, when the battery mounting frame 10 includes at least two first beam bodies 101 and at least two second beam bodies 102, a side wall surface of at least one first beam body 101 facing the mounting space 104 is provided with the first fitting buffer member 108, or a side wall surface of at least one second beam body 102 facing the mounting space 104 is provided with the first fitting buffer member 108, or a side wall surface of at least one first beam body 101 facing the mounting space 104 and a side wall surface of at least one first beam body 101 facing the mounting space 104 are both provided with the first fitting buffer member 108.

In some optional embodiments of this application, the battery mounting frame 10 may alternatively be constructed as a box structure with one open end, the open end of the box structure being the mounting opening 105, and a side wall surface of the box structure being provided with the first fitting buffer member 108.

The box body 20 of the battery 100 may be provided with multiple battery cells, and the battery 100 is mounted in the mounting space 104 through the mounting opening 105. For example, the battery 100 may enter and be mounted into the mounting space 104 through the mounting opening 105. The quantity of batteries 100 is the same as the quantity of mounting spaces 104, and each mounting space 104 can be mounted with one battery 100. An outer wall surface 201 of the box body 20 of the battery 100 is provided with a first buffer member 21. The first buffer member 21 has a first buffer surface 211, and the first buffer surface 211 is opposite the first fitting buffer surface 106, and the first buffer surface 211 abuts against the first fitting buffer surface 106. In some optional embodiments of this application, in the Z direction shown in FIGs. 9 and 10 (that is, in the vertical direction), from top to bottom, the first fitting buffer surface 106 may incline towards the mounting space 104, and the first buffer surface 211 may incline in a direction leaving the box body 20. In addition, in the Z direction shown in FIGs. 9 and 10 (that is, in the vertical direction), from top to bottom, the inclination directions of the first fitting buffer surface 106 and the first buffer surface 211 may be the same.

In some optional embodiments of this application, the quantity of the first buffer members 21 may be configured as multiple, the quantity of the first fitting buffer members 108 may be configured as multiple, and the multiple first buffer members 21 can correspond to the multiple first fitting buffer members 108 one-to-one.

During the process of mounting the battery 100 into the mounting space 104 through the mounting opening 105, the first fitting buffer surface 106 can abut against the first buffer surface 211. The first fitting buffer surface 106 and the first buffer surface 211 can fit with each other to play a guiding role, thereby reducing the difficulty of mounting the battery 100 and improving the efficiency of mounting the battery 100.

In addition, the first fitting buffer surface 106 is formed on the first fitting buffer member 108 arranged on the side wall surface of the mounting space 104, the first buffer surface 211 is formed on the first buffer member 21 arranged on the outer wall surface 201 of the box body 20 of the battery 100, and the first buffer surface 211 is made to be opposite and abut against the first fitting buffer surface 106. This can reduce the probability that the battery box 2 cannot be dismounted properly for maintenance after being mounted on the battery mounting frame 10 due to the first buffer member 21 being stuck at the mounting position on the battery mounting frame 10, thereby helping to reduce the difficulty of dismounting the battery box 2.

In addition, both the first fitting buffer member 108 and the first buffer member 21 can play a buffering role.

In some optional embodiments of this application, a material of the first fitting buffer member 108 may be, but is not limited to, metal, rubber, plastic, and the like.

In some optional embodiments of this application, the first fitting buffer surface 106 may be directly formed on a side wall surface of the battery mounting frame 10. In other words, the side wall surface of the mounting space 104 may be directly processed to form the first fitting buffer surface 106.

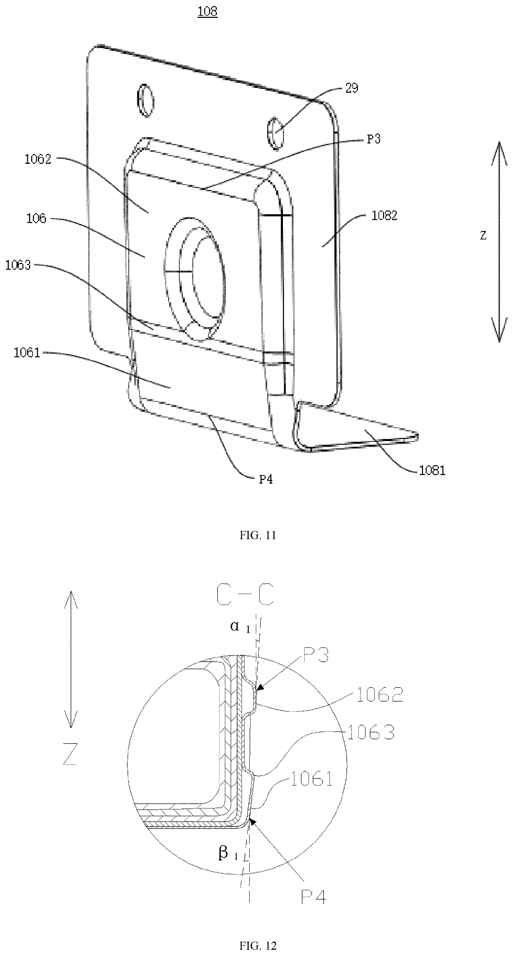

In some optional embodiments of this application, as shown in FIG. 11, the battery mounting frame 10 may include the first fitting buffer member 108. The first fitting buffer member 108 may be mounted on the battery mounting frame 10 by, but not limited to, snap-fit, screw connection, welding, and the like. For example, as shown in FIG. 11, the first fitting buffer member 108 may be provided with a connection hole 29. The first fitting buffer member 108 may be mounted on the battery mounting frame 10 by passing a bolt through the connection hole 29. A side wall surface of the first fitting buffer member 108 away from the battery mounting frame 10 may be formed with the first fitting buffer surface 106.

In the above technical solution, providing the first fitting buffer member 108 reduces the probability that the battery box 2 cannot be dismounted properly for maintenance after being mounted on the battery mounting frame 10 due to the first buffer member 21 being stuck at the mounting position on the battery mounting frame 10, thereby helping to reduce the difficulty of dismounting the battery box 2.

According to some embodiments of this application, as shown in FIGs. 9 to 11, the first fitting buffer surface 106 includes a third end P3 closer to the mounting space 104 and a fourth end P4 farther from the mounting space 104, the third end P3 being closer to the top of the mounting space 104 than the fourth end P4, and on the first fitting buffer surface 106, a position closer to the fourth end P4 is farther away from the top of the mounting space 104.

In the Z direction shown in FIG. 11 (that is, in the vertical direction), the battery mounting frame 10 includes the third end P3 and the fourth end P4. Compared with the fourth end P4, the third end P3 is closer to the top of the mounting space 104. In other words, the third end P3 is located above the fourth end P4. The first fitting buffer member 108 may have a first fitting buffer surface 106, and on the first fitting buffer surface 106, a position closer to the fourth end P4 is farther away from the top of the mounting space 104.

In the above technical solution, with the first fitting buffer surface 106 arranged as a structure that on the first fitting buffer surface 106, a position closer to the fourth end is farther away from the top of the mounting space 104, such that during the process of mounting the battery 100 into the mounting space 104, the first fitting buffer surface 106 may have a guiding fitting with the first buffer surface 211, reducing the probability of the battery 100 and the battery mounting frame 10 getting stuck, thereby allowing the battery 100 to be smoothly mounted into the mounting space 104. This helps to reduce the difficulty of mounting the battery 100, helps to improve the efficiency of mounting the battery 100, and can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2.

According to some embodiments of this application, the first fitting buffer surface 106 may be configured as an inclined surface intersecting with the horizontal plane and the vertical plane.

The first fitting buffer member 108 may have the first fitting buffer surface 106, and the first fitting buffer surface 106 may be configured as an inclined surface. The first fitting buffer surface 106 intersects with the horizontal plane, and the first fitting buffer surface 106 intersects with the vertical plane.

In some optional embodiments of this application, in the Z direction shown in FIG. 11 (that is, in the vertical direction), from the third end to the fourth end, the first fitting buffer surface 106 may incline in a direction leaving the mounting space 104, and the first fitting buffer surface 106 may intersect with the horizontal plane and the vertical plane.

In the above technical solution, with the first fitting buffer surface 106 constructed as an inclined surface intersecting with the horizontal plane and the vertical plane, during the process of mounting the battery 100 into the mounting space 104, the first fitting buffer surface 106 may have a guiding fitting with the first buffer surface 211, reducing the probability of the battery 100 and the battery mounting frame 10 getting stuck, thereby allowing the battery 100 to be smoothly mounted into the mounting space 104. This helps to reduce the difficulty of mounting the battery 100, helps to improve the efficiency of mounting the battery 100, and can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2.

According to some embodiments of this application, an included angle between the first fitting buffer surface 106 and the vertical plane may be less than or equal to 5°.

The first fitting buffer member 108 may have the first fitting buffer surface 106, the first fitting buffer surface 106 may be configured as an inclined surface, and the included angle between the inclined surface and the vertical plane may be less than or equal to 5°. In other words, the included angle between the inclined surface and the vertical plane may be, but is not limited to, 1°, 2°, 3°, 4°, and 5°.

In the above technical solution, with the first fitting buffer surface 106 constructed as a structure having an included angle less than or equal to 5° with the vertical plane, such that an inclination angle of the first fitting buffer surface 106 can be reasonable, helping to reduce the difficulty of mounting the battery 100. In addition, it can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2.

According to some embodiments of this application, the first fitting buffer surface 106 is configured as a curved surface.

The first fitting buffer member 108 may have the first fitting buffer surface 106, and the first fitting buffer surface 106 may be configured as a curved surface. In some optional embodiments of this application, the first fitting buffer surface 106 may be configured as a circular curved surface. In some optional embodiments of this application, the first fitting buffer surface 106 may be configured as an elliptical curved surface.

In the above technical solution, with the first fitting buffer surface 106 constructed as a curved surface, during the process of mounting the battery 100 into the mounting space 104, the first fitting buffer surface 106 may have a guiding fitting with the first buffer surface 211, reducing the probability of the battery 100 and the battery mounting frame 10 getting stuck, thereby allowing the battery 100 to be smoothly mounted into the mounting space 104. This helps to reduce the difficulty of mounting the battery 100, helps to improve the efficiency of mounting the battery 100, and can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2.

According to some embodiments of this application, a direction in which the first fitting buffer surface 106 protrudes faces away from the battery mounting frame 10.

The first fitting buffer member 108 may have the first fitting buffer surface 106, and the first fitting buffer surface 106 may be configured as a curved surface. In addition, the direction in which the curved surface protrudes may be away from the battery mounting frame 10. In other words, the curved surface may be arranged to protrude in a direction leaving the battery mounting frame 10. In other words, the curved surface may be arranged to protrude towards the mounting space 104.

In the above technical solution, with the first fitting buffer surface 106 constructed as a curved surface protruding away from the battery mounting frame 10, the probability that the battery box 2 cannot be dismounted properly for maintenance after being mounted on the battery mounting frame 10 due to the first buffer member 21 being stuck at the first fitting buffer member 108 is reduced, thereby helping to reduce the difficulty of dismounting the battery box 2. In addition, this can provide guidance for the battery 100 during the mounting process of the battery 100.

According to some embodiments of this application, the first fitting buffer surface 106 is configured as a curved surface and a direction in which the first fitting buffer surface 106 protrudes faces away from the battery mounting frame 10, and the first fitting buffer surface 106 includes a third edge farther from the battery mounting frame 10 and a fourth edge closer to the battery mounting frame 10, an included angle between a plane containing both the third edge and the fourth edge and the vertical plane being less than or equal to 5°.

The first fitting buffer member 108 may have the first fitting buffer surface 106, and the first fitting buffer surface 106 may be configured as a curved surface. In some optional embodiments of this application, the first fitting buffer surface 106 may be configured as a circular curved surface. In some optional embodiments of this application, the first fitting buffer surface 106 may be configured as an elliptical curved surface. In addition, the direction in which the first fitting buffer surface 106 protrudes may be away from the battery mounting frame 10. In other words, the first fitting buffer surface 106 may be arranged as protruding in a direction leaving the battery mounting frame 10.

The first fitting buffer surface 106 may include the fourth edge closer to the battery mounting frame 10, and the first fitting buffer surface 106 may further include the third edge farther from the battery mounting frame 10. The angle between the plane containing both the fourth edge and the third edge and the vertical plane may be less than or equal to 5°. It should be explained that each of the fourth edge and the third edge may be understood as a line, and the two lines can determine a plane, which is the plane containing both the fourth edge and the third edge. The angle between this plane and the vertical plane may be less than or equal to 5°. In other words, the angle between this plane and the vertical plane may be, but is not limited to, 1°, 2°, 3°, 4°, and 5°.

In the above technical solution, with the first fitting buffer surface 106 constructed as a structure having an included angle between the plane containing both the fourth edge and the third edge less than or equal to 5° with the vertical plane, such that an inclination angle of the first fitting buffer surface 106 can be reasonable. This can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2. In addition, this can provide guidance for the battery 100 during the mounting process of the battery 100.

According to some embodiments of this application, the first fitting buffer surface 106 includes multiple segment surfaces arranged sequentially in a direction from the third end to the fourth end, and its structure may be similar to the first buffer surface 211 in FIGs. 7 and 8.

The first fitting buffer member 108 may have the first fitting buffer surface 106, and the first fitting buffer surface 106 may include multiple segment surfaces, where the multiple segment surfaces may be arranged sequentially in the direction from the third end P3 to the fourth end P4. In some optional embodiments of this application, the first fitting buffer surface 106 may include two segment surfaces arranged sequentially in the direction from the third end P3 to the fourth end P4. In some optional embodiments of this application, the first fitting buffer surface 106 may include three segment surfaces, where the three segment surfaces may be arranged sequentially in the direction from the third end P3 to the fourth end P4.

In some optional embodiments of this application, each of the multiple segment surfaces may be constructed as a curved surface, and the multiple curved surfaces may have a same curvature, or at least two of the multiple curved surfaces have different curvatures.

In some optional embodiments of this application, each of the multiple segment surfaces may be constructed as an inclined surface, and the multiple inclined surfaces may have a same inclination degree, or at least two of the multiple inclined surfaces may have different inclination degrees.

In some optional embodiments of this application, part of the multiple segment surfaces may be constructed as curved surfaces, and another part of the multiple segment surfaces may be constructed as inclined surfaces.

In the above technical solution, with the first fitting buffer surface 106 constructed as a structure including multiple segment surfaces arranged sequentially, such that different surface structures may be adopted at different positions on the first fitting buffer surface 106. When the battery 100 is being mounted in the battery mounting frame 10, the structure of multiple segment surfaces allows for smooth docking between the battery 100 and the battery mounting frame 10.

According to some embodiments of this application, as shown in FIGs. 11 and 12, the first fitting buffer surface 106 includes a third segment surface 1062 and a fourth segment surface 1061, the third segment surface 1062 being closer to the third end than the fourth segment surface 1061, with an included angle between the third segment surface 1062 and the vertical plane being α1, and an included angle between the fourth segment surface 1061 and the vertical plane being β1, where α1 and β1 satisfy: α1≤β1.

The first fitting buffer member 108 may have the first fitting buffer surface 106, and the first fitting buffer surface 106 may include the third segment surface 1062 and the fourth segment surface 1061. The third segment surface 1062 may be adjacent to the fourth segment surface 1061, and in the height direction of the battery mounting frame 10 (that is, the Z direction shown in FIG. 12), the fourth segment surface 1061 may be located below the third segment surface 1062. In other words, the fourth segment surface 1061 may be located on a side of the third segment surface 1062 farther from the upper end of the first fitting buffer surface 106. It can also be understood as that, compared with the third segment surface 1062, the fourth segment surface 1061 is closer to the lower end of the first fitting buffer surface 106. In addition, an inclination angle of the fourth segment surface 1061 may be greater than or equal to an inclination angle of the third segment surface 1062.

The angle between the third segment surface 1062 and the vertical plane may be α1, and the angle between the fourth segment surface 1061 and the vertical plane may be β1, where α1 and β1 may satisfy the relationship: α1≤β1, that is, β1 may be greater than or equal to α1.

It can be understood that with the fourth segment surface 1061 arranged on the side of the third segment surface 1062 farther from the upper end of the first fitting buffer surface 106, that is, with the third segment surface 1062 arranged at a position closer to the third end than the fourth segment surface 1061, during the mounting, the fourth segment surface 1061 can contact the first buffer member 21 earlier than the third segment surface 1062, providing a good guiding effect.

In the above technical solution, during the process of mounting the battery 100 into the mounting space 104, the fourth segment surface 1061 can abut against the first buffer member 21 earlier than the third segment surface 1062, thereby reliably guiding the mounting of the battery 100, and reducing the difficulty of mounting the battery 100. In addition, the fourth segment surface 1061 being arranged as having an inclination angle greater than or equal to the inclination angle of the third segment surface 1062 helps to improve the guiding effect of the fourth segment surface 1061.

According to some embodiments of this application, as shown in FIG. 12, the first fitting buffer surface 106 further includes a second transition surface 1063, the second transition surface 1063 being a curved surface located between the third segment surface 1062 and the fourth segment surface 1061.

The first fitting buffer member 108 may have the first fitting buffer surface 106, and the first fitting buffer surface 106 may further include the second transition surface 1063. The second transition surface 1063 may be constructed as a circular curved surface, and the second transition surface 1063 may alternatively be constructed as an elliptical curved surface. In the Z direction shown in FIG. 6 (that is, in the vertical direction), the second transition surface 1063 may be located between the third segment surface 1062 and the fourth segment surface 1061. In some optional embodiments of this application, one end of the second transition surface 1063 may be connected to the fourth segment surface 1061, and another end of the second transition surface 1063 may be connected to the third segment surface 1062. Specifically, the upper end of the second transition surface 1063 may be connected to the lower end of the third segment surface 1062, and the lower end of the second transition surface 1063 may be connected to the upper end of the fourth segment surface 1061.

During the process of mounting the battery 100 into the mounting space 104, the fourth segment surface 1061 may first abut against the first buffer surface 211, then the fourth segment surface 1061 and the second transition surface 1063 may abut against the first buffer surface 211, and then the fourth segment surface 1061, the second transition surface 1063, and the third segment surface 1062 may abut against the first buffer surface 211.

In the above technical solution, with the second transition surface 1063 formed at the connection between the third segment surface 1062 and the fourth segment surface 1061, the surface between the third segment surface 1062 and the fourth segment surface 1061 may be constructed as a curved surface, allowing for smooth connection between the third segment surface 1062 and the second transition surface 1063, and smooth connection between the fourth segment surface 1061 and the second transition surface 1063. This helps to reduce the difficulty of dismounting and mounting the battery 100 and improving the efficiency of dismounting and mounting the battery 100.

As shown in FIGs. 8 and 12, after the battery 100 is mounted in the mounting space 104, the first segment surface 2111 can abut against the third segment surface 1062, and the fourth segment surface 1061 can abut against the second segment surface 2112. The first segment surface 2111 and the third segment surface 1062 each have an inclination angle. The fourth segment surface 1061 and the second segment surface 2112 each have an inclination angle.

According to some embodiments of this application, as shown in FIGs. 9 and 10, the battery mounting frame 10 has a side beam 109, and the first fitting buffer member 108 is arranged on a wall surface of the side beam 109 near the mounting space 104.

The first fitting buffer member 108 may be arranged on the wall surface of the side beam 109 near the mounting space 104. The first fitting buffer member 108 may have a first fitting buffer surface 106, and the first fitting buffer surface 106 may be located on a side of the first fitting buffer member 108 away from the side beam 109.

In some optional embodiments of this application, the side beam 109 may be understood as the first beam body 101 described above. In some optional embodiments of this application, the side beam 109 may be understood as the second beam body 102 described above. In some optional embodiments of this application, the side beam 109 may be understood as the first beam body 101 and the second beam body 102 described above.

In the above technical solution, with the first fitting buffer member 108 arranged on the wall surface of the side beam 109 near the mounting space 104, the first fitting buffer member 108 can fit with the first buffer member 21, so that the probability that the battery box 2 cannot be dismounted properly for maintenance after being mounted on the battery mounting frame 10 due to the first buffer member 21 being stuck at the first fitting buffer member 108 is reduced, thereby helping to reduce the difficulty of dismounting the battery box 2. In addition, this can provide guidance for the battery 100 during the mounting process of the battery 100.

According to some embodiments of this application, as shown in FIG. 9, the first fitting buffer member 108 is configured as multiple, and the multiple first fitting buffer members 108 are arranged at intervals along the side beam 109.

The quantity of the first fitting buffer members 108 may be configured as multiple, and the multiple first fitting buffer members 108 may be arranged at intervals along the side beam 109. For example, as shown in FIG. 9, the multiple first fitting buffer members 108 may be arranged at intervals along the Y direction.

In the above technical solution, multiple first fitting buffer members 108 are arranged and they can fit with multiple first buffer members 21. This can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2. In addition, this provides reliable guidance for the battery 100 during the mounting process of the battery 100.

According to some embodiments of this application, as shown in FIG. 9, the side beam 109 is rectangular, and at least part of the multiple first fitting buffer members 108 are arranged at positions near four corners of the side beam 109, and/or at least part of the multiple first fitting buffer members 108 are arranged at positions near midpoints of sides of the side beam 109.

The quantity of the first fitting buffer members 108 may be configured as multiple, and the side beam 109 may be constructed as rectangular. Specifically, a plane can be defined, where the plane is parallel to the side beam 109, and an orthographic projection of the side beam 109 on this plane may be rectangular, or the orthographic projection of the side beam 109 on this plane may be square. At least part of the multiple first fitting buffer members 108 may be arranged at positions near the four corners of the side frame 28. In other words, the orthographic projections of at least part of the multiple first fitting buffer members 108 on this plane may be located at positions near the four corners of the rectangle.

Or, at least part of the multiple first fitting buffer members 108 may be arranged at positions near the midpoints of the sides of the side beam 109. In other words, at least part of the multiple first fitting buffer members 108 may be arranged at positions near a middle portion of the side beam 109.

Or, part of the multiple first fitting buffer members 108 may be arranged at positions near the four corners of the side beam 109, and part of the multiple first fitting buffer members 108 may be arranged at positions near the midpoints of the sides of the side beam 109.

In the above technical solution, the multiple first fitting buffer members 108 may be arranged at reasonable positions, and they can fit with multiple first buffer members 21, which helps to protect the battery 100, thereby helping to reduce the probability of damage to the battery 100 due to impacts, collisions, and other stresses. This helps to reduce the probability of dangerous situations such as thermal runaway and explosion occurring with the battery 100.

According to some embodiments of this application, the first fitting buffer surfaces 106 of part of the first fitting buffer members 108 are configured as inclined surfaces, and at least one of the first fitting buffer members 108 with the first fitting buffer surface 106 configured as an inclined surface is arranged at a position near a midpoint of a side of the side beam 109.

The first fitting buffer surfaces 106 of part of the first fitting buffer members 108 may be configured as inclined surfaces, and at least one of the first fitting buffer members 108 with the first fitting buffer surface 106 configured as an inclined surface may be arranged at a position near a midpoint of a side of the side beam 109. The first fitting buffer surfaces 106 of another part of the first fitting buffer members 108 may be configured as including multiple segment surfaces, and at least one of the first fitting buffer members 108 with the first fitting buffer surface 106 configured as including multiple segment surfaces may be arranged at a position near one of the four corners of the side beam 109.

In the above technical solution, at least one of the first fitting buffer members 108 with the first fitting buffer surface 106 configured as an inclined surface is arranged at a position near a midpoint of a side of the side beam 109 such that it can fit with the first buffer member 21. This helps to protect the battery 100, and thereby reducing the probability of damage to the battery 100 due to impacts, collisions, and other stresses.

According to some embodiments of this application, as shown in FIG. 9, the battery mounting frame 10 may include multiple mounting spaces 104, enabling the battery mounting frame 104 to be used for simultaneously mounting multiple batteries 100, the first fitting buffer member 108 is provided as multiple, and any one of the multiple mounting spaces 104 is provided with at least one of the first fitting buffer member 108.

The battery mounting frame 10 may include multiple mounting spaces 104. For example, as shown in FIG. 9, the battery mounting frame 10 may include two mounting spaces 104, and each mounting space 104 may be used for mounting the battery 100. In addition, the first fitting buffer member 108 is provided as multiple, and any one of the multiple mounting spaces 104 is provided with at least one first fitting buffer member 108.

In the above technical solution, the battery mounting frame 10 is constructed as including multiple mounting spaces 104, such that the battery mounting frame 10 can be used for mounting multiple batteries 100. In addition, with at least one first fitting buffer member 108 provided in any one of the multiple mounting spaces 104, guidance and buffering protection can be provided for all the batteries 100 mounted in the battery mounting frame 10.

In some optional embodiments of this application, as shown in FIG. 9 and FIG. 10, the first fitting buffer surface 106 may be directly formed on an inner side wall of the battery mounting frame 10. In other words, an inner wall surface of the mounting space 104 may be directly processed to form the first fitting buffer surface 106.

In some optional embodiments of this application, the first fitting buffer surfaces 106 of part of the first fitting buffer members 108 may be used to fit with the first buffer members 21 located at positions near the middle portions of the first outer wall surface 2011. The maximum dimension of a first buffer member 21 located at a position near a middle portion of the first outer wall surface 2011 along the first direction may be a second dimension.

In some optional embodiments of this application, the first buffer member 21 and the box body 20 of the battery 100 may be integrally formed, or the first buffer member 21 and the box body 20 of the battery 100 may alternatively be separate parts. The first buffer member 21 and the box body 20 of the battery 100 may be connected by, but not limited to, snap-fit, screw connection, or welding.

According to some embodiments of this application, as shown in FIG. 7, the box body 20 of the battery 100 may include a first extension portion 27. When the battery 100 is mounted in the mounting space 104, in the Z direction shown in FIG. 7 (that is, in the vertical direction), the first extension portion 27 may be located below the battery mounting frame 10, and a second buffer member 271 may be provided between the first extension portion 27 and the battery mounting frame 10. As shown in FIG. 11, according to some embodiments of this application, the first fitting buffer member 108 has a first part 1082 and a second part 1081, and the first part 1082 and the second part 1081 are connected and form an included angle. The first part 1082 is provided on the side wall surface of the battery mounting frame 10 and is formed with the first fitting buffer surface 106, and the second part 1081 is located below the battery mounting frame 10.

The first fitting buffer member 108 may be an integrated part, that is, the first part 1082 and the second part 1081 are integrally formed, and there is an included angle between the first part 1082 and the second part 1081. For example, the first part 1082 and the second part 1081 may be formed as an "L"-shaped structure. The first part 1082 may be provided on the side wall surface of the battery mounting frame 10, and the first part 1082 may be formed with the first fitting buffer surface 106. Specifically, the surface of the first part 1082 away from the side wall surface of the battery mounting frame 10 may be formed with the first fitting buffer surface 106, and the second part 1081 may be located below the battery mounting frame 10.

In some optional embodiments of this application, the second part 1081 may be provided corresponding to the first extension portion 27, and the second buffer member 271 may be connected to the first extension portion 27, or the second buffer member 271 may be connected to the second part 1081.

In the above technical solution, the first fitting buffer member 108 is constructed as having the first part 1082 and the second part 1081 forming an included angle, allowing the second part 1081 to fit with the second buffer member 271. This helps to protect the battery 100, thereby helping to lower the probability of damage to the battery 100 due to impacts, collisions, and other stresses.

According to some embodiments of this application, this application further provides a battery assembly 200, the battery assembly 200 including the above battery 100 and the above battery mounting frame 10, where the battery 100 is mounted in the mounting space 104, and the first buffer member 21 is configured for connecting and fitting with the first fitting buffer member 108.

In the above technical solution, the first buffer member 21 and the first fitting buffer member 108 fit with each other, which can reduce the probability that the battery box 2 cannot be properly dismounted for maintenance after the battery box 2 is mounted on the battery mounting frame 10 due to the first buffer member 21 being stuck at the first fitting buffer member 108, thereby helping to reduce the difficulty of dismounting the battery box 2. In addition, through the fitting between the first buffer member 21 and the first fitting buffer member 108, the battery 100 can be protected, reducing the probability of damage to the battery 100 due to impacts, collisions, and other stresses, and reducing the probability of dangerous situations such as thermal runaway and explosion occurring with the battery 100.

According to some embodiments of this application, the first buffer member 21 has a first buffer surface facing away from the interior of the box body 20, the first buffer surface 211 being configured as intersecting with both a horizontal plane and a vertical plane perpendicular to the horizontal plane. The first fitting buffer member 108 has a first fitting buffer surface 106 facing the mounting space 104, the first fitting buffer surface 106 being configured as intersecting with both the horizontal plane and the vertical plane perpendicular to the horizontal plane. The first buffer surface 211 is suitable for being opposite and abutting against the first fitting buffer surface 106.

The first buffer member 21 is arranged on an outer wall surface 201 of the box body 20, where the first buffer member 21 has a first buffer surface 211 facing away from the interior of the box body 20, and the first buffer surface 211 is configured as intersecting with the horizontal plane and the vertical plane, the horizontal plane being perpendicular to the vertical plane.

The first fitting buffer member 108 is arranged on the battery mounting frame 10, and the first fitting buffer member 108 may have the first fitting buffer surface 106, where the first fitting buffer surface 106 is configured as intersecting with the horizontal plane and the vertical plane and the first fitting buffer surface 106 is arranged as facing the mounting space 104.

The first buffer surface 211 is suitable for being opposite and abutting against the first fitting buffer surface 106. Specifically, the first buffer surface 211 is suitable for being opposite and abutting against the first fitting buffer surface 106.

In the above technical solution, the first buffer surface 211 and the first fitting buffer surface 106 can fit with each other to play a guiding role, reducing the probability of the battery 100 and the battery mounting frame 10 getting stuck, thereby allowing the battery 100 to be smoothly mounted into the mounting space 104. This helps to reduce the difficulty of mounting the battery 100, helps to improve the efficiency of mounting the battery 100, and can reduce the probability that the battery box 2 cannot be dismounted properly for maintenance after being mounted on the battery mounting frame 10 due to the first buffer member 21 being stuck at the first fitting buffer member 108, thereby helping to reduce the difficulty of dismounting the battery box 2.

According to some embodiments of this application, this application further provides a vehicle frame, where the bottom of the vehicle frame is formed with a battery mounting space, a side wall of the battery mounting space is provided with a second fitting buffer member, the second fitting buffer member has a second fitting buffer surface facing the battery mounting space, and the second fitting buffer surface is configured as intersecting with both a horizontal plane and a vertical plane perpendicular to the horizontal plane.

The vehicle frame is formed with the battery mounting space for mounting the battery 100, and the battery mounting space may have an open mounting opening. The battery 100 can be mounted in the battery mounting space through the mounting opening. A side wall surface of the vehicle frame facing the battery mounting space may be provided with the second fitting buffer member. The second fitting buffer member may have the second fitting buffer surface, and the second fitting buffer surface is configured as intersecting with the horizontal plane and the vertical plane. The horizontal plane is perpendicular to the vertical plane, and the second fitting buffer surface is arranged as facing the battery mounting space.

The box body 20 of the battery 100 may be provided with multiple battery cells, and the battery 100 is mounted in the battery mounting space through the mounting opening. For example, the battery 100 may enter and be mounted into the battery mounting space through the mounting opening. The quantity of batteries 100 is the same as the quantity of battery mounting spaces, and each battery mounting space may be mounted with one battery 100. An outer wall surface 201 of the box body 20 of the battery 100 is provided with a first buffer member 21. The first buffer member 21 has a first buffer surface 211, and the first buffer surface 211 is opposite the second fitting buffer surface, and the first buffer surface 211 abuts against the second fitting buffer surface 106.

In a height direction of the vehicle frame, from top to bottom, the second fitting buffer surface may incline towards the battery mounting space, and the first buffer surface 211 may incline in a direction leaving the box body 20. In addition, in the height direction of the vehicle frame, from top to bottom, the inclination directions of the second fitting buffer surface and the first buffer surface 211 may be the same.

As some optional embodiments of this application, the quantity of the first buffer members 21 may be configured as multiple, the quantity of the second fitting buffer members may be configured as multiple, and the multiple first buffer members 21 may correspond to the multiple second fitting buffer members one-to-one.

During the process of mounting the battery 100 into the battery mounting space through the mounting opening, the second fitting buffer surface can abut against the first buffer surface 211. The second fitting buffer surface and the first buffer surface 211 can fit with each other to play a guiding role, thereby reducing the difficulty of mounting the battery 100 and improving the efficiency of mounting the battery 100.

In addition, the second fitting buffer surface is formed on the second fitting buffer member arranged on the side wall surface of the battery mounting space, the first buffer surface 211 is formed on the first buffer member 21 arranged on the outer wall surface 201 of the box body 20 of the battery 100, and the first buffer surface 211 is made to be opposite and abut against the second fitting buffer surface. This can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

In addition, both the second fitting buffer member and the first buffer member 21 can play a buffering role.

In some optional embodiments of this application, a material of the second fitting buffer member may be, but is not limited to, metal, rubber, plastic, and the like.

In some optional embodiments of this application, the second fitting buffer surface may be directly formed on a side wall surface of the vehicle frame. In other words, the side wall surface of the battery mounting space may be directly processed to form the second fitting buffer surface.

In some optional embodiments of this application, the vehicle frame may include the second fitting buffer member. The second fitting buffer member may be mounted on the vehicle frame by, but not limited to, snap-fit, screw connection, welding, and the like. A side wall surface of the second fitting buffer member away from the vehicle frame may be formed with the second fitting buffer surface.

In the above technical solution, providing the second fitting buffer member reduces the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

According to some embodiments of this application, the vehicle frame includes a fifth end closer to the battery mounting space and a sixth end farther from the center of the battery mounting space, the fifth end is closer to the top of the center of the battery mounting space than the sixth end, and on the second fitting buffer surface, a position closer to the sixth end is farther away from the top of the battery mounting space.

In the height direction of the vehicle frame, the vehicle frame includes the fifth end and the sixth end. The fifth end is closer to the top of the battery mounting space than the sixth end. In other words, the fifth end is located above the sixth end. The second fitting buffer member may have the second fitting buffer surface, and on the second fitting buffer surface, a position closer to the sixth end is farther away from the top of the battery mounting space.

In the above technical solution, with the second fitting buffer surface arranged as a structure that on the second fitting buffer surface, a position closer to the sixth end is farther away from the top of the battery mounting space, such that during the process of mounting the battery 100 into the battery mounting space, the second fitting buffer surface may have a guiding fitting with the first buffer surface 211, reducing the probability of the battery 100 and the vehicle frame getting stuck, thereby allowing the battery 100 to be smoothly mounted into the battery mounting space. This helps to reduce the difficulty of mounting the battery 100, helps to improve the efficiency of mounting the battery 100, and can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

According to some embodiments of this application, the second fitting buffer surface is configured as an inclined surface intersecting with the horizontal plane and the vertical plane.

The second fitting buffer member may have the second fitting buffer surface, and the second fitting buffer surface may be configured as an inclined surface. The second fitting buffer surface intersects with the horizontal plane, and the second fitting buffer surface intersects with the vertical plane.

In some optional embodiments of this application, in the height direction of the vehicle frame, from the fifth end to the sixth end, the second fitting buffer surface may incline in a direction leaving the battery mounting space, and the second fitting buffer surface may intersect with the horizontal plane and the vertical plane.

In the above technical solution, with the second fitting buffer surface constructed as an inclined surface intersecting with the horizontal plane and the vertical plane, during the process of mounting the battery 100 into the battery mounting space, the second fitting buffer surface can have a guiding fitting with the first buffer surface 211, reducing the probability of the battery 100 and the vehicle frame getting stuck, thereby allowing the battery 100 to be smoothly mounted into the battery mounting space. This helps to reduce the difficulty of mounting the battery 100, helps to improve the efficiency of mounting the battery 100, and can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

According to some embodiments of this application, an included angle between the second fitting buffer surface and the vertical plane is less than or equal to 5°.

The second fitting buffer member may have the second fitting buffer surface, the second fitting buffer surface may be configured as an inclined surface, and the included angle between the inclined surface and the vertical plane may be less than or equal to 5°. In other words, the included angle between the inclined surface and the vertical plane may be, but is not limited to, 1°, 2°, 3°, 4°, and 5°.

In the above technical solution, with the second fitting buffer surface constructed as a structure having an included angle less than or equal to 5° with the vertical plane, such that an inclination angle of the second fitting buffer surface can be reasonable, helping to reduce the difficulty of mounting the battery 100. In addition, it reduces the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

According to some embodiments of this application, the second fitting buffer surface is configured as a curved surface.

The second fitting buffer member may have the second fitting buffer surface, and the second fitting buffer surface may be configured as a curved surface. In some optional embodiments of this application, the second fitting buffer surface may be configured as a circular curved surface. In some optional embodiments of this application, the second fitting buffer surface may be configured as an elliptical curved surface.

In the above technical solution, with the second fitting buffer surface constructed as a curved surface, during the process of mounting the battery 100 into the battery mounting space, the second fitting buffer surface can have a guiding fitting with the first buffer surface 211, reducing the probability of the battery 100 and the vehicle frame getting stuck, thereby allowing the battery 100 to be smoothly mounted into the battery mounting space. This helps to reduce the difficulty of mounting the battery 100, helps to improve the efficiency of mounting the battery 100, and can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2.

According to some embodiments of this application, a direction in which the curved surface protrudes faces away from the vehicle frame.

The second fitting buffer member may have the second fitting buffer surface, and the second fitting buffer surface may be configured as a curved surface. In addition, the direction in which the curved surface protrudes may be away from the vehicle frame, that is, the curved surface may be arranged as protruding in a direction leaving the vehicle frame. In other words, the curved surface may be arranged as protruding towards the battery mounting space.

In the above technical solution, with the second fitting buffer surface constructed as a curved surface protruding away from the vehicle frame, the probability that the battery box 2 cannot be dismounted properly for maintenance after being mounted on the vehicle frame due to the first buffer member 21 being stuck at the second fitting buffer member is reduced, thereby helping to reduce the difficulty of dismounting the battery box 2. In addition, this can provide guidance for the battery 100 during the mounting process of the battery 100.

According to some embodiments of this application, the second fitting buffer surface is configured as a curved surface, a direction in which the curved surface protrudes faces away from the vehicle frame, and the curved surface includes a fifth edge farther from the vehicle frame and a sixth edge closer to the vehicle frame, an included angle between a plane containing both the fifth edge and the sixth edge and the vertical plane being less than or equal to 5°.

The second fitting buffer member may have the second fitting buffer surface, and the second fitting buffer surface may be configured as a curved surface. In some optional embodiments of this application, the second fitting buffer surface may be configured as a circular curved surface. In some optional embodiments of this application, the second fitting buffer surface may be configured as an elliptical curved surface. In addition, the direction in which the curved surface protrudes may be away from the vehicle frame. In other words, the curved surface may be arranged as protruding in the direction leaving the vehicle frame.

The curved surface may include the sixth edge closer to the vehicle frame, and may further include the fifth edge farther from the vehicle frame. The included angle between the plane containing both the sixth edge and the fifth edge and the vertical plane may be less than or equal to 5°. It should be explained that each of the sixth edge and the fifth edge may be understood as a line, and the two lines can determine a plane, which is the plane containing both the sixth edge and the fifth edge. The included angle between this plane and the vertical plane may be less than or equal to 5°. In other words, the included angle between this plane and the vertical plane may be, but is not limited to, 1°, 2°, 3°, 4°, and 5°.

In the above technical solution, with the curved surface constructed as a structure having an included angle between the plane containing both the sixth edge and the fifth edge less than or equal to 5° with the vertical plane, such that an inclination angle of the second fitting buffer surface can be reasonable. This can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2. In addition, this can provide guidance for the battery 100 during the mounting process of the battery 100.

According to some embodiments of this application, the second fitting buffer surface includes multiple segment surfaces arranged sequentially in a direction from the fifth end to the sixth end.

The second fitting buffer member may have the second fitting buffer surface, and the second fitting buffer surface may include multiple segment surfaces, where the multiple segment surfaces may be arranged sequentially in the direction from the fifth end to the sixth end. In some optional embodiments of this application, the second fitting buffer surface may include two segment surfaces, where the two segment surfaces may be arranged sequentially in the direction from the fifth end to the sixth end. In some optional embodiments of this application, the second fitting buffer surface may include three segment surfaces, where the three segment surfaces may be arranged sequentially in the direction from the fifth end to the sixth end.

In some optional embodiments of this application, each of the multiple segment surfaces may be constructed as a curved surface, and the multiple curved surfaces may have a same curvature, or at least two of the multiple curved surfaces have different curvatures.

In some optional embodiments of this application, each of the multiple segment surfaces may be constructed as an inclined surface, and the multiple inclined surfaces may have a same inclination degree, or at least two of the multiple inclined surfaces may have different inclination degrees.

In some optional embodiments of this application, part of the multiple segment surfaces may be constructed as curved surfaces, and another part of the multiple segment surfaces may be constructed as inclined surfaces.

In the above technical solution, with the second fitting buffer surface constructed as a structure including multiple segment surfaces arranged sequentially, such that different surface structures can be adopted at different positions on the second fitting buffer surface. When the battery 100 is being mounted on the vehicle frame, the structure of multiple segment surfaces allows smooth docking between the battery 100 and the vehicle frame. In addition, this can also reduce the probability that the battery box 2 cannot be properly dismounted for maintenance after the battery box 2 is mounted on the vehicle frame due to the first buffer member 21 being stuck at the second fitting buffer member, thereby helping to reduce the difficulty of dismounting the battery box 2.

According to some embodiments of this application, the second fitting buffer surface includes a fifth segment surface and a sixth segment surface, the fifth segment surface being closer to the fifth end than the sixth segment surface, with an included angle between the fifth segment surface and the vertical plane being α2, and an included angle between the sixth segment surface and the vertical plane being β2, where α2 and β2 satisfy: α2≤β2.

The second fitting buffer member may have the second fitting buffer surface, and the second fitting buffer surface may include the fifth segment surface and the sixth segment surface. The fifth segment surface may be adjacent to the sixth segment surface, and in the height direction of the vehicle frame, the sixth segment surface may be located below the fifth segment surface. In other words, the sixth segment surface may be located on a side of the fifth segment surface farther from an upper end of the second fitting buffer surface. It can also be understood as that, compared with the fifth segment surface, the sixth segment surface is closer to a lower end of the second fitting buffer surface. In addition, an inclination angle of the sixth segment surface may be greater than or equal to an inclination angle of the fifth segment surface.

The included angle between the fifth segment surface and the vertical plane may be α2, and the included angle between the sixth segment surface and the vertical plane may be β2, where α2 and β2 may satisfy the relationship: α2≤β2, that is, β2 may be greater than or equal to α2.

It can be understood that with the sixth segment surface arranged on the side of the fifth segment surface farther from the upper end of the second fitting buffer surface, that is, with the fifth segment surface arranged at a position closer to the fifth end than the sixth segment surface, during the mounting, the sixth segment surface can contact the first buffer member 21 earlier than the fifth segment surface, providing a good guiding effect.

In the above technical solution, during the process of mounting the battery 100 into the battery mounting space, the sixth segment surface can abut against the first buffer member 21 earlier than the fifth segment surface, thereby reliably guiding the mounting of the battery 100, and reducing the difficulty of mounting the battery 100. In addition, the sixth segment surface being arranged as having an inclination angle greater than or equal to the inclination angle of the fifth segment surface helps to improve the guiding effect of the sixth segment surface.

According to some embodiments of this application, the second fitting buffer surface further includes a third transition surface, the third transition surface being a curved surface located between the fifth segment surface and the sixth segment surface.

The second fitting buffer member may have the second fitting buffer surface, and the second fitting buffer surface may further include the third transition surface. The third transition surface may be constructed as a circular curved surface, and the third transition surface may alternatively be constructed as an elliptical curved surface. In the height direction of the vehicle frame, the third transition surface may be located between the fifth segment surface and the sixth segment surface. In some optional embodiments of this application, one end of the third transition surface may be connected to the sixth segment surface, and another end of the third transition surface may be connected to the fifth segment surface. Specifically, an upper end of the third transition surface may be connected to a lower end of the fifth segment surface, and a lower end of the third transition surface may be connected to an upper end of the sixth segment surface.

During the process of mounting the battery 100 into the battery mounting space, the sixth segment surface may first abut against the first buffer surface 211, then the sixth segment surface and the third transition surface may abut against the first buffer surface 211, and then the sixth segment surface, the third transition surface, and the fifth segment surface may abut against the first buffer surface 211.

In the above technical solution, with the third transition surface formed at the connection between the fifth segment surface and the sixth segment surface, the surface between the fifth segment surface and the sixth segment surface may be constructed as a curved surface, allowing for smooth connection between the fifth segment surface and the third transition surface, and smooth connection between the sixth segment surface and the third transition surface. This helps to reduce the difficulty of dismounting and mounting the battery 100 and helps to improve the efficiency of dismounting and mounting the battery 100.

It should be noted that after the battery 100 is mounted in the battery mounting space, the first segment surface 2111 may abut against the fifth segment surface, and the sixth segment surface may abut against the second segment surface 2112.

According to some embodiments of this application, the vehicle frame has a side frame, and the second fitting buffer member is arranged on a wall surface of the side frame near the battery mounting space.

The second fitting buffer member may be arranged on the wall surface of the side frame near the battery mounting space. The second fitting buffer member may have the second fitting buffer surface, and the second fitting buffer surface may be located on a side of the second fitting buffer member away from the side frame.

In the above technical solution, with the second fitting buffer member arranged on the wall surface of the side frame near the battery mounting space, the second fitting buffer member can fit with the first buffer member 21, so that the probability that the battery box 2 cannot be dismounted properly for maintenance after being mounted on the vehicle frame due to the first buffer member 21 being stuck at the second fitting buffer member is reduced, thereby helping to reduce the difficulty of dismounting the battery box 2. In addition, this can provide guidance for the battery 100 during the mounting process of the battery 100.

According to some embodiments of this application, the second fitting buffer member is configured as multiple, and the multiple second fitting buffer members are arranged at intervals along the side frame.

The quantity of the second fitting buffer members may be configured as multiple, and the multiple second fitting buffer members may be arranged at intervals along the side frame.

In the above technical solution, multiple second fitting buffer members are arranged and they can fit with multiple first buffer members. This can reduce the probability that the battery box 2 cannot be dismounted properly for maintenance after being mounted on the vehicle frame due to the first buffer member 21 being stuck at the second fitting buffer member, thereby helping to reduce the difficulty of dismounting the battery box 2. In addition, this provides reliable guidance for the battery 100 during the mounting process of the battery 100.

According to some embodiments of this application, the side frame is rectangular, and at least part of the multiple second fitting buffer members are arranged at positions near four corners of the side frame, and/or at least part of the multiple second fitting buffer members are arranged at positions near midpoints of sides of the side frame.

The quantity of the second fitting buffer members may be configured as multiple, and the side frame may be constructed as rectangular. Specifically, a plane can be defined, where the plane is parallel to the side frame, and an orthographic projection of the side frame on this plane may be rectangular, or the orthographic projection of the side frame on this plane may be square. At least part of the multiple second fitting buffer members may be arranged at positions near the four corners of the side frame 28. In other words, the orthographic projections of at least part of the multiple second fitting buffer members on this plane may be located at positions near the four corners of the rectangle.

Or, at least part of the multiple second fitting buffer members may be arranged at positions near the midpoints of the sides of the side frame. In other words, at least part of the multiple second fitting buffer members may be arranged at positions near a middle portion of the side frame.

Or, part of the multiple second fitting buffer members may be arranged at positions near the four corners of the side frame, and part of the multiple second fitting buffer members may be arranged at positions near the midpoints of the sides of the side frame.

In the above technical solution, the multiple second fitting buffer members may be arranged at reasonable positions, and they can fit with multiple first buffer members, which helps to protect the battery 100, thereby helping to reduce the probability of damage to the battery 100 due to impacts, collisions, and other stresses. This helps to reduce the probability of dangerous situations such as thermal runaway and explosion occurring with the battery 100.

According to some embodiments of this application, the second fitting buffer surfaces of part of the second fitting buffer members are configured as inclined surfaces, and at least one of the second fitting buffer members with the second fitting buffer surface configured as an inclined surface is arranged at a position near a midpoint of a side of the side frame.

In some embodiments of this application, the second fitting buffer surfaces of part of the second fitting buffer members may be configured as inclined surfaces, and at least one of the second fitting buffer members with the second fitting buffer surface configured as an inclined surface may be arranged at a position near a midpoint of a side of the side frame. The second fitting buffer surfaces of another part of the second fitting buffer members may be configured as including multiple segment surfaces, and at least one of the second fitting buffer members with the second fitting buffer surface configured as including multiple segment surfaces may be arranged at a position near one of the four corners of the side frame.

In the above technical solution, at least one of the second fitting buffer members with the second fitting buffer surface configured as an inclined surface is arranged at a position near a midpoint of a side of the side frame such that it can fit with the first buffer member 21. This helps to protect the battery 100, and thereby reducing the probability of damage to the battery 100 due to impacts, collisions, and other stresses.

According to some embodiments of this application, the vehicle frame includes multiple battery mounting spaces, enabling the vehicle frame to be used for simultaneously mounting multiple batteries, the second fitting buffer member is provided as multiple, and any one of the multiple battery mounting spaces is provided with at least one second fitting buffer member.

The vehicle frame may include multiple battery mounting spaces. For example, the vehicle frame may include two battery mounting spaces, and each battery mounting space may be used for mounting the battery 100. In addition, the second fitting buffer member is provided as multiple, and any one of the multiple battery mounting spaces is provided with at least one second fitting buffer member.

In the above technical solution, the vehicle frame is constructed as a structure including multiple battery mounting spaces, such that the vehicle frame can be used for mounting multiple batteries 100. In addition, with at least one second fitting buffer member provided in any one of the multiple battery mounting spaces, guidance and buffering protection can be provided for all the batteries 100 mounted in the vehicle frame.

In some optional embodiments of this application, the second fitting buffer surface may be directly formed on an inner side wall of the vehicle frame. In other words, the inner side wall of the battery mounting space may be directly processed to form the second fitting buffer surface.

According to some embodiments of this application, this application further provides an electric apparatus, the electric apparatus including the above battery 100 and the above battery mounting frame 10, where the battery 100 is mounted in the mounting space 104 of the battery mounting frame 10.

According to some embodiments of this application, this application further provides an electric apparatus, the electric apparatus including the above battery 100 and the above vehicle frame, where the battery 100 is mounted in the battery mounting space of the vehicle frame.

The electric apparatus may be any device or system that uses the battery 100 as described above.

In some embodiments of this application, referring to FIGs. 2 to 12, this application provides a battery assembly 200, the battery assembly 200 including a battery mounting frame 10 and a battery 100. The battery mounting frame 10 may include three first beam bodies 101 and two second beam bodies 102. The three first beam bodies 101 may be arranged at intervals along the X direction shown in FIG. 2, and the three first beam bodies 101 may be arranged in parallel. The two second beam bodies 102 may be arranged at intervals along the Y direction shown in FIG. 2, and the two second beam bodies 102 may be arranged in parallel.

Two of the three first beam bodies 101 and the two second beam bodies 102 may be sequentially connected end-to-end. Specifically, each of two ends of one of the first beam bodies 101 may be connected to one end of each of the two second beam bodies 102; and each of two ends of the other first beam body 101 may be connected to the other end of each of the two second beam bodies 102. At least part of the structure of the first beam body 101 may be located above the second beam bodies 102. In addition, the third first beam body 101 may be arranged between the other two first beam bodies 101, and one end of the third first beam body 101 may be connected to a middle portion of one of the second beam bodies 102, and the other end of the third second beam body 102 may be connected to a middle portion of the other second beam body 102, thereby the battery mounting frame 10 can be formed with two mounting spaces 104. The mounting space 104 has an open mounting opening 105. A side wall surface of the mounting space 104 is provided with the first fitting buffer member 108. The first fitting buffer member 108 has the first fitting buffer surface 106, and the first fitting buffer surface 106 includes the fourth segment surface 1061 and the third segment surface 1062. The third segment surface 1062 is located on a side of the fourth segment surface 1061 farther from a lower end of the first fitting buffer surface 106. From the top to bottom direction shown in FIGs. 11 and 12, the fourth segment surface 1061 and the third segment surface 1062 both incline towards an inner side wall of the mounting space 104.

As shown in FIGs. 3 to 8, each mounting space 104 is mounted with one battery 100. The side frame 28 of the box body 20 of the battery 100 is provided with the first buffer member 21. The first buffer member 21 has the first buffer surface 211 opposite and abutting against the first fitting buffer surface 106. The first buffer surface 211 includes the first segment surface 2111 and a second segment surface 2112. The second segment surface 2112 is adjacent to the first segment surface 2111, and the second segment surface 2112 is located on the side of the first segment surface 2111 farther from an upper end of the first buffer surface 211. In the direction from the top to bottom of the battery assembly 200, the first segment surface 2111 and the second segment surface 2112 both incline towards the inner side wall of the mounting space 104. After the battery 100 is mounted in the mounting space 104, the first segment surface 2111 can abut against the third segment surface 1062, and the fourth segment surface 1061 can abut against the second segment surface 2112. The inclination angles of the second segment surface 2112 and the third segment surface 1062 may both be 1 degree.

The above technical solution reduces the probability that the battery box 2 cannot be dismounted properly for maintenance after being mounted on the battery mounting frame 10 due to the first buffer member 21 being stuck at the mounting position on the battery mounting frame 10, thereby helping to reduce the difficulty of dismounting the battery box 2.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of this application. In this specification, illustrative expressions of these terms do not necessarily refer to the same embodiment or example. Moreover, the specific features, structures, materials, or characteristics described may be combined in any suitable manners in any one or more embodiments or examples.

Although the embodiments of this application have been shown and described, persons of ordinary skill in the art can understand that various changes, modifications, substitutions, and variants of these embodiments may be made without departing from the principle and essence of this application, and the scope of this application is limited by the claims and its equivalents.

## Claims

1. A battery box, comprising:
a box body; and
a first buffer member, arranged on an outer wall surface of the box body, wherein the first buffer member has a first buffer surface facing away from the interior of the box body, and the first buffer surface is configured as intersecting with both a horizontal plane and a vertical plane perpendicular to the horizontal plane.

2. The battery box according to claim 1, wherein the box body comprises a top wall and a bottom wall, the first buffer surface having a first end closer to the interior of the box body and a second end farther from the interior of the box body, wherein
the first end is arranged closer to the top wall than the second end, and on the first buffer surface, a position closer to the second end is closer to the bottom wall.

3. The battery box according to claim 1 or 2, wherein the first buffer surface is configured as an inclined surface intersecting with the horizontal plane and the vertical plane.

4. The battery box according to claim 3, wherein an included angle between the first buffer surface and the vertical plane is less than or equal to 5°.

5. The battery box according to claim 1 or 2, wherein the first buffer surface is configured as a curved surface.

6. The battery box according to claim 5, wherein a direction in which the first buffer surface protrudes faces away from the box body.

7. The battery box according to claim 1 or 2, wherein the first buffer surface is configured as a curved surface and a direction in which the first buffer surface protrudes faces away from the box body, and the first buffer surface comprises a first edge closer to the interior of the box body and a second edge farther from the interior of the box body, an included angle between a plane containing both the first edge and the second edge and the vertical plane being less than or equal to 5°.

8. The battery box according to claim 2, wherein the first buffer surface comprises multiple segment surfaces arranged sequentially in a direction from the first end to the second end.

9. The battery box according to claim 8, wherein the first buffer surface comprises a first segment surface and a second segment surface, the first segment surface being closer to the first end than the second segment surface, with an included angle between the first segment surface and the vertical plane being α, and an included angle between the second segment surface and the vertical plane being β, wherein α and β satisfy: α≥β.

10. The battery box according to claim 9, wherein the first buffer surface further comprises a first transition surface, the first transition surface being a curved surface located between the first segment surface and the second segment surface.

11. The battery box according to any one of claims 1 to 10, wherein the battery box further comprises a fastener, and the fastener is configured for fixing the first buffer member to the box body.

12. The battery box according to claim 11, wherein the first buffer surface is recessed to form a mounting groove, a bottom wall of the mounting groove is provided with a mounting hole, the fastener passes through the mounting hole to connect with the box body, and at least part of the fastener is located within the mounting groove.

13. The battery box according to claim 12, wherein along a depth direction of the mounting groove, an end of the fastener away from the box body is lower than an opening of the mounting groove.

14. The battery box according to any one of claims 1 to 13, wherein the first buffer member comprises an elastic member and a wear-resistant member, the elastic member being located between the box body and the wear-resistant member.

15. The battery box according to any one of claims 1 to 14, wherein the box body has a side frame, and the first buffer member is arranged on an outer wall surface of the side frame.

16. The battery box according to claim 15, wherein the first buffer member is configured as multiple and the multiple first buffer members are arranged at intervals along the side frame.

17. The battery box according to claim 16, wherein the side frame is rectangular, and at least part of the multiple first buffer members are arranged at positions near four corners of the side frame, and/or at least part of the multiple first buffer members are arranged at positions near midpoints of sides of the side frame.

18. The battery box according to claim 17, wherein at least two of the multiple first buffer members are provided with first buffer surfaces of different structures, with one located at a position near one of the four corners of the side frame and the other located at a position near one of the midpoints of the sides of the side frame.

19. The battery box according to any one of claims 1 to 18, wherein the battery box further comprises a second buffer member, the second buffer member is arranged on an outer wall surface of the box body, the second buffer member has a second buffer surface facing away from the box body, and the second buffer surface is configured as being parallel to the horizontal plane or the vertical plane.

20. The battery box according to claim 19, wherein the outer wall surface comprises a first outer wall surface, the second buffer surface is configured as being parallel to the horizontal plane, the first buffer member is configured as multiple, and at least one of the first buffer members and the second buffer member are arranged side by side on the first outer wall surface along a first direction, the first direction being a direction perpendicular to the first outer wall surface.

21. The battery box according to claim 20, wherein the first buffer member and the second buffer member arranged side by side are located on the first outer wall surface at a position near an end portion of the first outer wall surface, and at least another one of the multiple first buffer members is located on the first outer wall surface at a position near a middle portion of the first outer wall surface, wherein
a maximum dimension of the first buffer member arranged side by side with the second buffer member along the first direction on the first outer surface is a first dimension, and a maximum dimension of the first buffer member located on the first outer wall surface at a position near the middle portion of the first outer wall surface along the first direction is a second dimension, the first dimension being smaller than the second dimension.

22. A battery, wherein the battery comprises battery cells and the battery box according to any one of claims 1 to 21, wherein the battery box has an accommodating space, and the battery cells are placed in the accommodating space.

23. A battery mounting frame, wherein the battery mounting frame is configured for forming a mounting space for mounting a battery, the battery mounting frame is provided with a first fitting buffer member on a side wall surface facing the mounting space, the first fitting buffer member has a first fitting buffer surface facing the mounting space, and the first fitting buffer surface is configured as intersecting with both a horizontal plane and a vertical plane perpendicular to the horizontal plane.

24. The battery mounting frame according to claim 23, wherein the first fitting buffer surface comprises a third end closer to the center of the mounting space and a fourth end farther from the center of the mounting space, the third end being closer to the top of the mounting space than the fourth end, and on the first fitting buffer surface, a position closer to the fourth end is farther away from the top of the mounting space.

25. The battery mounting frame according to claim 23 or 24, wherein the first fitting buffer surface is configured as an inclined surface intersecting with the horizontal plane and the vertical plane.

26. The battery mounting frame according to claim 25, wherein an included angle between the first fitting buffer surface and the vertical plane is less than or equal to 5°.

27. The battery mounting frame according to claim 23 or 24, wherein the first fitting buffer surface is configured as a curved surface.

28. The battery mounting frame according to claim 27, wherein a direction in which the first fitting buffer surface protrudes faces away from the battery mounting frame.

29. The battery mounting frame according to claim 23 or 24, wherein the first fitting buffer surface is configured as a curved surface and a direction in which the first fitting buffer surface protrudes faces away from the battery mounting frame, and the first fitting buffer surface comprises a third edge farther from the battery mounting frame and a fourth edge closer to the battery mounting frame, an included angle between a plane containing both the third edge and the fourth edge and the vertical plane being less than or equal to 5°.

30. The battery mounting frame according to claim 24, wherein the first fitting buffer surface comprises multiple segment surfaces arranged sequentially in a direction from the third end to the fourth end.

31. The battery mounting frame according to claim 30, wherein the first fitting buffer surface comprises a third segment surface and a fourth segment surface, the third segment surface being closer to the third end than the fourth segment surface, with an included angle between the third segment surface and the vertical plane being α1, and an included angle between the fourth segment surface and the vertical plane being β1, wherein α1 and β1 satisfy: α1≤β1.

32. The battery mounting frame according to claim 31, wherein the first fitting buffer surface further comprises a second transition surface, the second transition surface being a curved surface located between the third segment surface and the fourth segment surface.

33. The battery mounting frame according to any one of claims 23 to 32, wherein the battery mounting frame has a side beam, and the first fitting buffer member is arranged on a wall surface of the side beam near the mounting space.

34. The battery mounting frame according to claim 33, wherein the first fitting buffer member is configured as multiple and the multiple fitting buffer members are arranged at intervals along the side beam.

35. The battery mounting frame according to claim 34, wherein the side beam is rectangular, and at least part of the multiple first fitting buffer members are arranged at positions near four corners of the side beam, and/or at least part of the multiple first fitting buffer members are arranged at positions near midpoints of sides of the side beam.

36. The battery mounting frame according to any one of claims 33 to 35, wherein the first fitting buffer surfaces of part of the first fitting buffer members are configured as inclined surfaces, and at least one of the first fitting buffer members with the first fitting buffer surface configured as an inclined surface is arranged at a position near a midpoint of a side of the side beam.

37. The battery mounting frame according to any one of claims 23 to 36, wherein the battery mounting frame comprises multiple mounting spaces, enabling the battery mounting frame to be used for simultaneously mounting multiple batteries, the first fitting buffer member is provided as multiple, and any one of the multiple mounting spaces is provided with at least one of the first fitting buffer members.

38. The battery mounting frame according to any one of claims 23 to 37, wherein the first fitting buffer member has a first part and a second part, the first part and the second part are connected and form an included angle, the first part is arranged on a side wall surface of the battery mounting frame and is formed with the first fitting buffer surface, and the second part is located below the battery mounting frame.

39. A battery assembly, comprising:
the battery according to any one of claims 1 to 22, and
the battery mounting frame according to any one of claims 23 to 38, wherein the battery is mounted in the mounting space, and the first buffer member is configured to engage with the first fitting buffer member.

40. A vehicle frame, wherein the bottom of the vehicle frame is formed with a battery mounting space, a side wall of the battery mounting space is provided with a second fitting buffer member, the second fitting buffer member has a second fitting buffer surface facing the battery mounting space, and the second fitting buffer surface is configured as intersecting with both a horizontal plane and a vertical plane perpendicular to the horizontal plane.

41. The vehicle frame according to claim 40, wherein the vehicle frame comprises a fifth end closer to the battery mounting space and a sixth end facing away from the center of the battery mounting space, the fifth end is closer to the top of the center of the battery mounting space than the sixth end, and on the second fitting buffer surface, a position closer to the sixth end is farther away from the top of the battery mounting space.

42. The vehicle frame according to claim 40 or 41, wherein the second fitting buffer surface is configured as an inclined surface intersecting with the horizontal plane and the vertical plane.

43. The vehicle frame according to claim 42, wherein an included angle between the second fitting buffer surface and the vertical plane is less than or equal to 5°.

44. The vehicle frame according to claim 40 or 41, wherein the second fitting buffer surface is configured as a curved surface.

45. The vehicle frame according to claim 44, wherein a direction in which the curved surface protrudes faces away from the vehicle frame.

46. The vehicle frame according to claim 40 or 41, wherein the second fitting buffer surface is configured as a curved surface, a direction in which the curved surface protrudes faces away from the vehicle frame, and the curved surface comprises a fifth edge farther from the vehicle frame and a sixth edge closer to the vehicle frame, an included angle between a plane containing both the fifth edge and the sixth edge and the vertical plane being less than or equal to 5°.

47. The vehicle frame according to claim 41, wherein the second fitting buffer surface comprises multiple segment surfaces arranged sequentially in a direction from the fifth end to the sixth end.

48. The vehicle frame according to claim 47, wherein the second fitting buffer surface comprises a fifth segment surface and a sixth segment surface, the fifth segment surface being closer to the fifth end than the sixth segment surface, with an included angle between the fifth segment surface and the vertical plane being α2, and an included angle between the sixth segment surface and the vertical plane being β2, wherein α2 and β2 satisfy: α2≤β2.

49. The vehicle frame according to claim 48, wherein the second fitting buffer surface further comprises a third transition surface, the third transition surface being a curved surface located between the fifth segment surface and the sixth segment surface.

50. The vehicle frame according to any one of claims 40 to 49, wherein the vehicle frame has a side frame, and the second fitting buffer member is arranged on a wall surface of the side frame near the battery mounting space.

51. The vehicle frame according to claim 50, wherein the second fitting buffer member is configured as multiple and the multiple second fitting buffer members are arranged at intervals along the side frame.

52. The vehicle frame according to claim 51, wherein the side frame is rectangular, and at least part of the multiple second fitting buffer members are arranged at positions near four corners of the side frame, and/or at least part of the multiple second fitting buffer members are arranged at positions near midpoints of sides of the side frame.

53. The vehicle frame according to any one of claims 50 to 52, wherein the second fitting buffer surfaces of part of the second fitting buffer members are configured as inclined surfaces, and at least one of the second fitting buffer members with the second fitting buffer surface configured as an inclined surface is arranged at a position near a midpoint of a side of the side frame.

54. The vehicle frame according to any one of claims 40 to 53, wherein the vehicle frame comprises multiple battery mounting spaces, enabling the vehicle frame to be used for simultaneously mounting multiple batteries, the second fitting buffer member is provided as multiple, and any one of the multiple battery mounting spaces is provided with at least one second fitting buffer member.

55. An electric apparatus, wherein the electric apparatus comprises the battery according to any one of claims 1 to 22, and the battery mounting frame according to any one of claims 23 to 37, wherein the battery is mounted in the mounting space of the battery mounting frame; or
the electric apparatus comprises the battery according to any one of claims 1 to 22, and the vehicle frame according to any one of claims 40 to 54, wherein the battery is mounted in the battery mounting space of the vehicle frame.
